# EUROPÄISCHE PATENTSCHRIFT

(11) **EP 2 350 549 B1**
(45) Veröffentlichungstag und Bekanntmachung des Hinweises auf die Patenterteilung: **06.04.2016**
(21) Anmeldenummer: 09760092.8
(22) Anmeldetag: 02.11.2009
(51) Int. Cl.: F28D 20/00

(54) **VORRICHTUNG UND ANLAGE ZUM ZWISCHENSPEICHERN THERMISCHER ENERGIE**
DEVICE AND INSTALLATION FOR THE INTERMEDIATE STORAGE OF HEAT ENERGY
DISPOSITIF ET INSTALLATION DE STOCKAGE TEMPORAIRE D'ÉNERGIE THERMIQUE

(30) Priorität: 01.11.2008 DE 102008043380; 08.03.2009 DE 102009001390; 10.08.2009 DE 102009036550; 22.08.2009 DE 102009028825
(43) Veröffentlichungstag der Anmeldung: 03.08.2011
(73) Patentinhaber: Ed. Züblin AG, 70567 Stuttgart (DE); Deutsches Zentrum für Luft- und Raumfahrt e.V., 51147 Köln (DE)
(72) Erfinder: BROSIG, Stefan, 70563 Stuttgart (DE); BAHL, Carsten, 12205 Berlin (DE); BRAND, Thomas, 14471 Potsdam (DE); VOIGT, Thomas, 70794 Filderstadt (DE); STEINMANN, Wolf-Dieter, 71034 Böblingen (DE)
(74) Vertreter: Patentanwälte Dr. Keller, Schwertfeger
(86) Internationale Anmeldenummer: PCT/EP2009/007833
(87) Internationale Veröffentlichungsnummer: WO 2010/060524

(56) Entgegenhaltungen:
- DE-C- 718 229
- US-A- 3 382 917
- US-A- 4 137 898
- US-A- 4 222 365

## Beschreibung

### Technisches Gebiet:

Die Erfindung betrifft eine Vorrichtung und eine Anordnung zum Zwischenspeichern thermischer Energie gemäß den Merkmalen der unabhängigen Patentansprüche 1 oder 2.

Angesichts weltweit schwindender Primärrohstoffe als Ressourcen zur Energieerzeugung gewinnen regenerative und alternative Konzepte immer mehr an Bedeutung. Beispielhaft sei die Nutzung von Sonnenenergie in solarthermischen Kraftwerken oder die Nutzung von Abwärme industrieller Fertigungsprozesse genannt. Da diese alternativen Energieformen jedoch an die Einstrahlung der Sonne oder an bestimmte industrielle Prozesse gekoppelt sind, ist deren jederzeitige Verfügbarkeit nicht gewährleistet. Deren praktische Verwendbarkeit hängt somit in starkem Maße von der Möglichkeit ab, die zu einem bestimmten Zeitpunkt anfallende Energie zwischenspeichern und zu einem späteren Zeitpunkt bereitstellen zu können. Der Speicherung thermischer Energie kommt somit eine zentrale Bedeutung bei der Entwicklung und Umsetzung alternativer Konzepte zur Energiegewinnung zu.

### Stand der Technik:

Bekannte Anlagen zur Speicherung thermischer Energie umfassen im wesentlichen eine Wärmequelle, beispielsweise einen Sonnenkollektor oder eine Verbrennungskraftmaschine, einen Wärmespeicher mit einem thermisch be- und entladbaren Speichermedium, und zumindest einen Wärmekreislauf zum Be- und Entladen des Wärmespeichers, bei dem ein Arbeitsmedium von der Wärmequelle zum Wärmespeicher bzw. vom Wärmespeicher zum Wärmebedarfsort strömt.

Für die Wirksamkeit des ganzen Systems ist das Speichermedium von zentraler Bedeutung. Dieses muss im wesentlichen zwei Anforderungen erfüllen, nämlich einerseits eine hohe thermische Speicherkapazität aufweisen, das heißt eine möglichst große Fähigkeit besitzen, thermische Energie pro Gewichts- und/oder Volumeneinheit aufnehmen zu können, und andererseits sich durch eine hohe Wärmeleitfähigkeit auszeichnen, das heißt die Wärme muss sich möglichst schnell im Speichermedium verteilen können, um ein rasches Be- bzw. Entladen des Speichers zu ermöglichen.

Als Speichermedium sind bereits Flüssigkeiten bekannt, die die beiden oben genannten Kriterien erfüllen. Für den Niedertemperaturbereich bis etwa 100° eignet sich Wasser als Speichermedium, da es kostengünstig zur Verfügung steht und sich durch seine hohe thermische Speicherkapazität auszeichnet. Als Nachteil erweist sich jedoch das rasche Ansteigen des Dampfdrucks bei Temperaturen über 100° C, wodurch aufwändige Druckbehälter notwendig werden. Aus diesem Grund werden für höhere Temperaturbereiche Flüssigkeiten mit einem höheren Siedepunkt verwendet, wie zum Beispiel Wärmeträgeröle oder Salzschmelzen, womit jedoch eine deutliche Erhöhung der Investitionskosten verbunden ist. Durch Zirkulation des flüssigen Speichermediums ergibt sich eine konvektive Wärmeübertragung, die ursächlich ist für eine schnelle und gleichmäßige Be- und Entladung des Speichermediums.

Neben Flüssigspeichern sind auch schon Feststoffspeicher bekannt, die beispielsweise aus mineralischen Schüttstoffen, aber auch aus Stahl, Guss, Schamott oder dergleichen bestehen können. Metalle eignen sich aufgrund ihres hohen spezifischen Gewichts und der hohen Wärmeleitfähigkeit gut als Speichermedium, verursachen jedoch hohe Investitionskosten. Hingegen zeichnen sich die übrigen Materialien zwar durch ein hohes Speichervermögen aus, benötigen jedoch wegen ihrer begrenzten Wärmeleitfähigkeit verhältnismäßig viel Zeit für das Be- bzw. Entladen, so dass deren Verwendung nur bedingt möglich ist.

Das US-Patent 4,222,365 beschreibt eine Vorrichtung zum Speichern thermischer Energie mit einem ersten im oberen Teil des Behälters gelegenen Teilbereich, der von einem Rohrleitungssystem durchzogen ist, in dem ein Arbeitsmedium zur Zu- und Abführung von thermischer Energie strömt. Ein im unteren Teil des Behälters angeordneter zweiter Teilbereich dient der Aufnahme eines thermisch be- und entladenbaren Speichermediums. Luft strömt zur Übertragung von thermischer Energie zwischen dem Rohrleitungssystem und dem Speichermedium während des Be- bzw. Entladens, wobei das Speichermedium selbst als Schüttgut ausgebildet ist und Zwischenräume zur Durchleitung des Fluids aufweist. Eine Wärmetauscherwendel bildet das Rohrleitungssystem, die Rohre den ersten Teilbereich und die Schüttung des zweiten Teilbereich. Mittels einer im unteren Teil der Schächte befindlichen Ventilatoranordnung zirkuliert die Luft im Kreislauf zuerst durch die Schächte entlang der darin angeordneten Wärmetauscher und anschließend durch die Zwischenräume der Schüttung.

### Darstellung der Erfindung:

Vor diesem Hintergrund liegt der Erfindung die Aufgabe zugrunde, einen verbesserten Wärmespeicher mit einer optimierten thermischen Speicherkapazität und hohen Be- und Entladeleistung anzugeben, der sowohl eine zuverlässige als auch wirtschaftliche Speicherung thermischer Energie erlaubt.

Diese Aufgabe wird durch eine Vorrichtung mit den Merkmalen der Patentansprüche 1 oder 2 und einer Anlage mit den Merkmalen des Patentanspruchs 9 gelöst.

Vorteilhafte Ausführungsformen ergeben sich aus den Unteransprüchen.

Die Erfindung baut auf der Erkenntnis auf, dass Feststoffe als Speichermedium aufgrund ihrer sich durch deren feste Struktur ergebenden einfachen Handhabung und ihrer hohen thermischen Speicherkapazität grundsätzlich zum Zwischenspeichern thermischer Energie eignen, diese Eignung jedoch wegen deren schlechterer Wärmeleitfähigkeit im Vergleich zu Flüssigkeiten eingeschränkt ist.

Um diesen Nachteil fester Speichermedien zu kompensieren, sieht die Erfindung vor, dass das Speichermedium von einer Vielzahl von Strömungsräumen durchzogen ist, durch welche ein mit thermischer Energie beaufschlagtes bzw. beaufschlagbares Fluid strömt. Auf diese Weise wird erreicht, dass das Speichermedium gleichmäßig über sein gesamtes Volumen mit thermischer Energie beschickt bzw. entladen wird. Das Wärmeleitverhalten des Speichermediums spielt nur noch eine untergeordnete Rolle, da die zurückzulegenden Wärmeleitstrecken zwischen den Strömungsräumen nur kurz sind. Auf diese Weise gelingt es der Erfindung, den sich aus der Forderung nach hoher Wärmeleitfähigkeit und der Verwendung eines festen Speichermediums ergebenden Widerspruch aufzulösen.

Gemäß der Erfindung wird der Wärmetransport ins Innere des Speichermediums von einem Fluid ausgeführt, das in einem Be- oder Entladekreislauf von einem ersten Teilbereich zu einem zweiten Teilbereich der Vorrichtung strömt, wobei im ersten Teilbereich ein Wärmetausch mit einem innerhalb eines Rohrleitungssystems geführten Arbeitsmedium stattfindet und der zweite Teilbereich das Speichermedium aufweist.

Um dabei einen möglichst effizienten Wärmeübergang vom Arbeitsmedium auf das Fluid zu erreichen, ist gemäß einer vorteilhaften Ausführungsform der Erfindung vorgesehen, dass Arbeitsmedium und Fluid im Gegenstrom fließen.

Um Strömungsverluste im Be- und Entladekreislauf möglichst gering zu halten, sieht die Erfindung vor, durch konstruktive Maßnahmen die Wegstrecke vom ersten Teilbereich zum zweiten Teilbereich möglichst kurz zu gestalten, beispielsweise indem diese Bereiche möglichst unmittelbar benachbart zueinander angeordnet sind.

Die erfindungsgemäße Speicherausbildung sieht vor, den ersten Teilbereich entlang einer Ebene anzuordnen, wobei sich der zweite Teilbereich entlang beider Seiten des ersten Teilbereichs erstreckt. Auf diese Weise können Wärmespeicher zur Erreichung vorbestimmter Speicherkapazitäten in beliebiger Länge hergestellt werden. Solche Ausführungsformen der Erfindung eignen sich insbesondere zur Herstellung modular aufgebauter Speicheranlagen, wobei derartige Einzelspeicher sandwichartig in planparalleler Lage nebeneinander angeordnet sein können, zum parallelen Be- bzw. Entladen mit thermischer Energie oder hintereinander zum seriellen Be- bzw. Entladen.

Als Speichermedium wird ein Körper mit fester Außenfläche verwendet. Darunter fallen zunächst Feststoffkörper, das heißt Körper, die im Betriebszustand der Vorrichtung durch und durch einen festen Aggregatszustand aufweisen.

Als Speichermedium geeignete Feststoffkörper können vielfältiger Natur sein. So kann der Feststoffkörper einstückig ausgebildet sein, also aus einem Monolith bestehen. Vorteilhafterweise wird ein solcher Feststoffkörper im Zuge seiner Herstellung direkt vor Ort in seiner bestimmungsgemäßen Form gegossen. Als bevorzugter Baustoff kann beispielsweise Beton Verwendung finden, bei dem die Strömungsräume durch Einlegen von Hohlprofilen oder dergleichen hergestellt werden. Der Baustoff Beton hat den Vorteil, dass er überall und kostengünstig zur Verfügung steht und sich damit auch komplexe Formen herstellen lassen. Durch Verwendung geeigneter Zuschlagsstoffe, Zemente, Zusatzstoffe, Zusatzmittel und Beimischungen von Additiven besteht ferner die Möglichkeit, den Beton und damit das Speichermedium an die jeweiligen Erfordernisse anzupassen.

Eine alternative Art, das Speichermedium aus Feststoff herzustellen, besteht in der Aneinanderfügung einer Vielzahl von Formkörpern nebeneinander und/oder übereinander. Formkörper haben den Vorteil, dass die werkseitig vorgefertigt und infolge Lagerhaltung innerhalb kürzester Zeit in großen Stückzahlen zu Verfügung gestellt werden können. Durch die werkseitige Fertigung wird eine gleichbleibend hohe Qualität der Formkörper erreicht, so dass auch ein daraus hergestelltes Speichermedium über sein ganzes Volumen einheitliche Eigenschaften besitzt. Durch das geringere Gewicht und Volumen im Vergleich zu einem einstückigen Feststoffkörper lassen sich Formkörper sowohl bei der Herstellung des Speichermediums als auch bei der Ausführung von Wartungs- und Reparaturarbeiten besser handhaben und erlauben darüber hinaus am Ende der Nutzungszeit des Speichers einen problemlosen Rückbau des Feststoffkörpers. Es ist sogar möglich, die einzelnen Formkörper nach deren Demontage in einem anderen Wärmespeicher wieder zu verwenden.

Zur Schaffung von Strömungsräumen bei einem aus Formkörpern hergestellten Speichermedium ist es gemäß der Erfindung möglich, dass jeder Formkörper durchgehende Strömungskanäle besitzt. Bei entsprechender Aneinanderfügung mehrerer Formkörper fluchten die Strömungskanäle übereinander liegender Formkörper und bilden auf diese Weise einen durchgehenden Strömungsraum.

Es ist ebenfalls möglich, die Formkörper mit oder ohne Strömungskanäle derart in eine relative Lage zueinander zu bringen, dass sich die Strömungsräume durch den Abstand zwischen den Formkörpern ergeben.

Ganz allgemein kann durch Wahl einer geeigneten Lage der Feststoffkörper zueinander eine strömungstechnische Optimierung derart erfolgen, dass das von den Feststoffkörpern gebildete Speichermedium gleichmäßig von dem Fluid durchströmt wird. Dazu kann es notwendig sein, dass die Feststoffkörper nicht mehr parallel oder im rechten Winkel zueinander angeordnet sind.

Als Material für die Feststoffkörper eignen sich alle Stoffe, die eine gute Wärmeleitfähigkeit aufweisen und deren thermische Speicherkapazität bezogen auf das Volumen oder Gewicht möglichst groß ist. Das heißt, das Material für das Speichermedium muss in der Lage sein, möglichst viel thermische Energie aufzunehmen bzw. abzugeben und die thermische Leitfähigkeit muss ausreichen, um die vorhandene thermische Energie möglichst schnell in das Speichermedium ein- bzw. ausleiten zu können.

Dieser Forderung werden vor allem Metalle gerecht, die jedoch bei der Herstellung einer erfindungsgemäßen Vorrichtung hohe Investitionskosten verursachen. Ebenfalls geeignet und aus wirtschaftlicher Sicht zu bevorzugen sind daher gemäß der Erfindung natürliche oder künstliche mineralische Stoffe, wie zum Beispiel Beton, Schamott, Gestein, Keramik, Salz und dergleichen. Um die thermische Leitfähigkeit mancher Materialien zu erhöhen, sieht die Erfindung in einer besonderen Ausgestaltung vor, in das Material des Feststoffkörpers Zusätze zur Erhöhung der thermischen Leitfähigkeit zu geben. Dazu eignen sich beispielsweise Graphit, Bauxit, Aluminiumoxid, Metalle, Natriumchlorid oder Kaliumchlorid.

Gemäß der Erfindung liegt das Arbeitsmedium gasförmig und/oder flüssig vor und kann beispielsweise von einem Wärmeträgeröl, Wasser, Wasserdampf oder Luft gebildet sein. Das Arbeitsmedium ist innerhalb eines Rohrleitungssystems geführt, das den ersten Teilbereich durchzieht. Zur Verbesserung eines innigen Austauschs thermischer Energie zwischen dem Arbeitsmedium und dem Fluid sehen vorteilhafte Ausführungsformen der Erfindung vor, die Oberfläche der Rohrleitungen, über welche der Wärmetausch erfolgt, mit Rippen oder Profilierungen zu versehen, so dass für den Wärmeübergang eine vergrößerte Oberfläche zur Verfügung steht. In diesem Sinne kann das Rohrleitungssystem im ersten Teilbereich in Schlaufen gelegt sein, so dass das Arbeitsmedium den ersten Teilbereich mehrmals durchströmt. Durch die damit erreichte Erhöhung der Aufenthaltsdauer des Arbeitsmediums im ersten Teilbereich ist ein intensiverer Wärmeaustausch mit dem Fluid möglich.

In einer alternativen Ausführung kann das Arbeitsmedium Druckluft sein, die zuvor in einem Verdichter komprimiert wurde und einem nach dem Wärmespeicher angeordneten Druckluftspeicher, zum Beispiel einer Salzkaverne, zugeführt wird. Das Rohrleitungssystem ist dementsprechend gemäß den Anforderungen aus dieser Beanspruchung auszulegen. Im Falle üblicher adiabatischer Druckluftspeicherverfahren (wie beispielsweise in EP 1 857 614 beschrieben) kann hierbei die durchgeleitete Druckluft Drücke bis zu 65 bar und Temperaturen von 650° C erreichen.

Zur vereinfachten Montage und Demontage, aber auch zu Reparatur- und Wartungszwecken erweist es sich als vorteilhaft, das Rohrleitungssystem so auszubilden, dass Zulauf und Ablauf auf einer gemeinsamen Seite liegen. Dies ermöglicht das Einschieben des vorgefertigten Rohrleitungssystems von dieser Seite, ohne dass weitere Arbeiten vor Ort notwendig sind.

Das Fluid kann sowohl von einer Flüssigkeit als auch einem Gas oder einem Gemisch aus beidem gebildet sein. Bei Verwendung eines gasförmigen Fluids sind solche Stoffe bevorzugt, die eine besonders gute Wärmeleitfähigkeit besitzen. Durch die damit erreichte Steigerung der Wärmeleitfähigkeit des Fluids ist ein besserer Wärmeübergang vom Arbeitsmedium auf das Speichermedium möglich mit der Folge kürzerer Be- und Entladezeiten. Erfindungsgemäß wird vorgeschlagen solche Gase als Fluid einzusetzen, deren Molekulargewicht bzw. Atomgewicht weniger als die Hälfte des Molekulargewichts bzw. Atomgewichts von Stickstoff beträgt, vorzugsweise weniger als 20 %, wie es beispielsweise für Wasserstoff order Helium zutrifft oder ein Gemisch aus diesen und gegebenenfalls weiteren Gasen.

In Weiterentwicklung der Erfindung ist die Vorrichtung von einer gasdichten Umhüllung umgeben, die es erlaubt den umhüllten Bereich mit Unterdruck zu beaufschlagen. In Verbindung mit einem gasförmigen Fluid könnte auf diese Weise die benötigte Gasmenge drastisch verringert werden ohne Einbußen bei der Wärmeleitfähigkeit des Fluids in Kauf nehmen zu müssen. Der Grund hierfür liegt darin, dass zwar weniger Gasteilchen für den Wärmetransport zur Verfügung stehen, dies aber durch eine schneller Teilchenbewegung kompensiert wird.

Als flüssiges Fluid eignen sich neben Salzschmelzen, Wärmeträgerölen und dergleichen auch flüssiger Schwefel, der eine wirksame Wärmeübertragung gewährleistet und somit eine Reduzierung der Wärmeübertragungsflächen zwischen Arbeitsmedium und Fluid ermöglicht. Die Verwendung von flüssigem Schwefel hat zudem den Vorteil, dass dieser als Abfallprodukt bei der Erdgasreinigung sehr kostengünstig zur Verfügung steht, als chemisches Grundelement sich nicht weiter zersetzen lässt, also unzerstörbar ist, und sich nicht in Wasser löst, so dass ausgelaufener Schwefel nicht ins Grundwasser gewaschen wird.

Gemäß einer weiteren vorteilhaften Ausführungsform der Erfindung durchströmt das Fluid den ersten Teilbereich im wesentlichen vertikal, um eine natürliche Konvektion des Fluids innerhalb der Vorrichtung zu ermöglichen oder im Falle einer Zwangskonvektion die Kräfte aus der natürlichen Konvektion als Antrieb für den Be- und Entladekreislauf unterstützend zu nutzen. Einen Zwangskonvektion erfolgt bei Gasen mit Hilfe von Gebläsen, bei Flüssigkeiten mit Pumpen oder durch Einleitung von Gasblasen in die Flüssigkeit, die mit ihrem Aufsteigen die Flüssigkeit mitnehmen.

Gemäß einer anderen vorteilhaften Ausgestaltung der Erfindung ist der Einsatz von Strömungsleiteinrichtungen zur Lenkung und/oder Regulierung der Fluidströmung vorgesehen. Da das Fluid innerhalb der Vorrichtung stets dem Strömungsweg mit geringstem Widerstand folgt, besteht die Gefahr, dass innerhalb des Speichermediums Zonen entstehen, die stärker fluiddurchströmt sind und daher intensiver mit thermischer Energie beladen werden als andere. Die sich daraus ergebende uneinheitlichen Beladung des Speichermediums über das Speichervolumen verhindert eine vollständige Nutzung der vorhandnen Speicherkapazität. Durch Strömungsleiteinrichtungen können konstruktiv bedingte lokale Unterschiede der Strömungswiderstände ausgeglichen werden, so dass auch in Bereichen mit höherem Strömungswiderstand eine ausreichende Durchströmung gewährleistet ist.

Eine andere Zielsetzung verfolgen Strömungsleiteinrichtungen, die dazu dienen, das Speichermedium sukzessive zu be- bzw. entladen, so dass Teilbereiche des Speichermediums nacheinander bis zur maximalen Speicherkapazität genutzt werden. Der Vorteil einer solchen Ausführungsform besteht darin, dass bereits zu einem sehr frühen Zeitpunkt die volle Energieleistung eines bestimmten Teilbereichs abgerufen werden kann.

Eine andere vorteilhafte Ausführungsform der Erfindung sieht vor, das Speichermedium zusätzlich und direkt mit thermischer Energie zu beaufschlagen. Dies geschieht erfindungsgemäß durch Einleitung eines Fluids, das unmittelbar einem industriellen Prozess entstammt, beispielsweise in Form heißer Abgase einer Verbrennungskraftmaschine oder Flüssigkeiten aus einem Kühlprozess, in die Strömungsräume des Speichermediums. Umgekehrt ist es ebenfalls möglich, das Speichermedium direkt zu entladen, indem das Fluid durch das thermisch beladene Speichermedium geführt und im weiteren ohne Zwischenschaltung eines Wärmetauschkreises einem Wärmeverbraucher zugeleitet wird. Eine wiederum andere Ausführungsform der Erfindung weist zwei voneinander getrennte Rohrleitungssysteme auf, in denen jeweils ein Arbeitsmedium strömt. So kann das erste Rohrleitungssystem zum Beladen des Speichermediums dienen und ein dafür optimiertes Arbeitsmedium besitzen. Das zweite Rohrleitungssystem hingegen ist für den Entladevorgang des Speichermediums bestimmt und dessen Arbeitsmedium für diese Aufgabe optimiert.

Bei einer Weiterentwicklung dieser Ausführungsform bilden die zwei ansonsten voneinander getrennten Rohrleitungssysteme eine gemeinsame Kontaktfläche aus, so dass ein Teil der Energie im Arbeitsmedium des ersten Rohrleitungssystem direkt auf das Arbeitsmedium des zweiten Rohrleitungssystem übertragen werden kann und nur die restliche Energie in das Speichermedium eingespeist wird. Das Verhältnis zwischen übertragener Energie und gespeicherter Energie kann durch die Massenströme des Fluids im Speichermedium sowie des Arbeitsmediums im zweiten Rohrleitungssystem gesteuert werden. Die Vorteile einer derartigen Ausführungsform sind, dass die gespeicherte Energie schnell bereitgestellt werden kann, da die Zwischenschaltung eines andere Mediums unter bestimmten Bedingungen entfallen kann, dass ein schnelles Umschalten zwischen Lade- und Entladebetrieb möglich ist und dass Materialeinsparungen durch die Doppelfunktion des ersten Rohrleitungssystem als Energieüberträger für das Speichermedium einerseits und als Energieüberträger für das zweite Rohrleitungssystem andererseits möglich sind.

Als Arbeitsmedium für das zweite Rohrleitungssystem kann unter anderem auch Schwefel verwendet werden. Beispielsweise kann in hochtemperatursolarthermischen Kraftwerken (Turmkraftwerken) Schwefel als Antriebsmittel für die Turbinen dienen, da er verglichen mit anderen Arbeitsmedien eine wesentlich stärkere Volumenausdehnung des Dampfes bei Steigerung der Temperatur aufweist. Das liegt daran, dass Schwefel beim Verdampfen noch als S₈-Moleküle vorliegt, die sich bei weiterer Erwärmung schon bei 700 °C im wesentlichen in S₂-Moleküle aufgespalten haben. Schon allein dadurch tritt eine Vervierfachung des Volumens auf, ohne die zusätzliche thermische Ausdehnung des Gases zu berücksichtigen.

### Kurze Beschreibung der Zeichnungen:

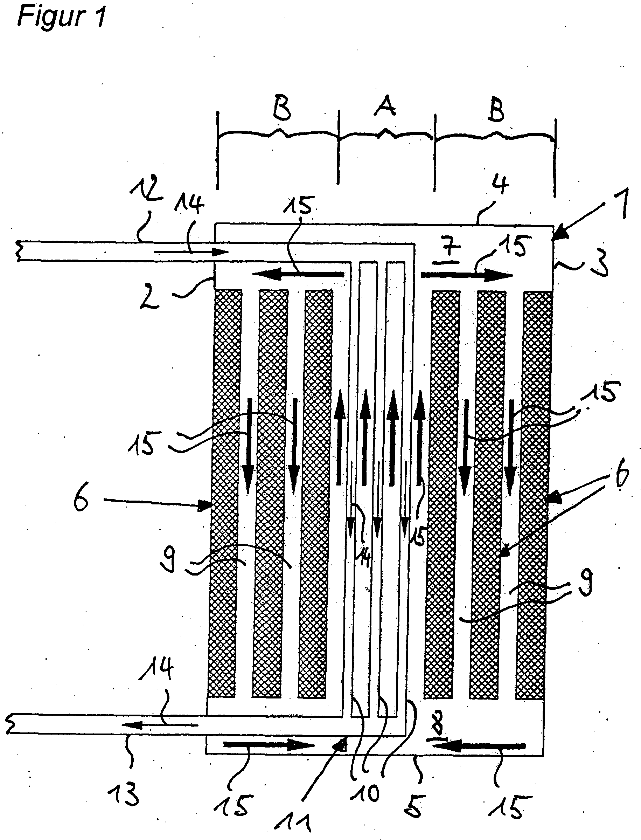

Die Erfindung wird nachstehend anhand mehrerer in der Zeichnung dargestellter Ausführungsbeispiele näher erläutert, wobei zusätzliche Merkmale und Vorteile beschrieben werden. Zur Erleichterung des Verständnisses werden für gleiche oder gleich wirkende Merkmale unterschiedlicher Ausführungsformen des Ausführungsbeispiels gleiche Bezugszeichen verwendet. Die in den Fig. 1 bis 7 und 10 bis 21 dargestellten Ausführungsvarianten der Vorrichtung dienen lediglich zur Illustration und sind, soweit sie nicht in den Schutzbereich der Patentansprüche fallen, vom Patentschutz ausgenommen.

Es zeigt
- Fig. 1: einen Längsschnitt durch eine erste Ausführungsform einer Vorrichtung in schematischer Darstellung,
- Fig. 2: einen Längsschnitt durch eine Ausführungsform eines Speichermediums einer Vorrichtung,
- Fig. 3: eine Draufsicht auf das in Fig. 2 dargestellte Speichermedium,
- Fig. 4a: einen Längsschnitt durch eine Ausführungsform eines Speichermediums einer Vorrichtung,
- Fig. 4b: eine Draufsicht auf das in Fig. 4a dargestellte Speichermedium,
- Fig. 5a: eine vereinfachte Darstellung einer Ausführungsform eines Speichermediums einer Vorrichtung,
- Fig. 5b: eine vereinfachte Darstellung einer Ausführungsform eines Speichermediums einer Vorrichtung,
- Fig. 6: einen Längsschnitt durch eine Ausführungsform einer Vorrichtung,
- Fig. 7: einen Querschnitt durch die in Fig. 6 dargestellte Vorrichtung,
- Fig. 8: eine Schrägansicht auf einer Ausführungsform einer erfindungsgemäßen Vorrichtung,
- Fig. 9: eine Schrägansicht auf eine zweite Ausführungsform einer erfindungsgemäßen Vorrichtung,
- Fig. 10: einen Längsschnitt durch eine Ausführungsform einer Vorrichtung,
- Fig. 11: eine Schrägansicht auf eine Ausführungsform einer Vorrichtung,
- Fig. 12: einen Längsschnitt durch eine Ausführungsform einer Vorrichtung,
- Fig. 13: einen Längsschnitt durch eine Ausführungsform einer Vorrichtung,
- Fig. 14: einen Längsschnitt durch eine Ausführungsform einer Vorrichtung,
- Fig. 15: einen Querschnitt durch die in Fig. 14 dargestellte Vorrichtung,
- Fig. 16a und b: jeweils einen Längsschnitt durch eine Ausführungsform in unterschiedlichen Betriebszuständen,

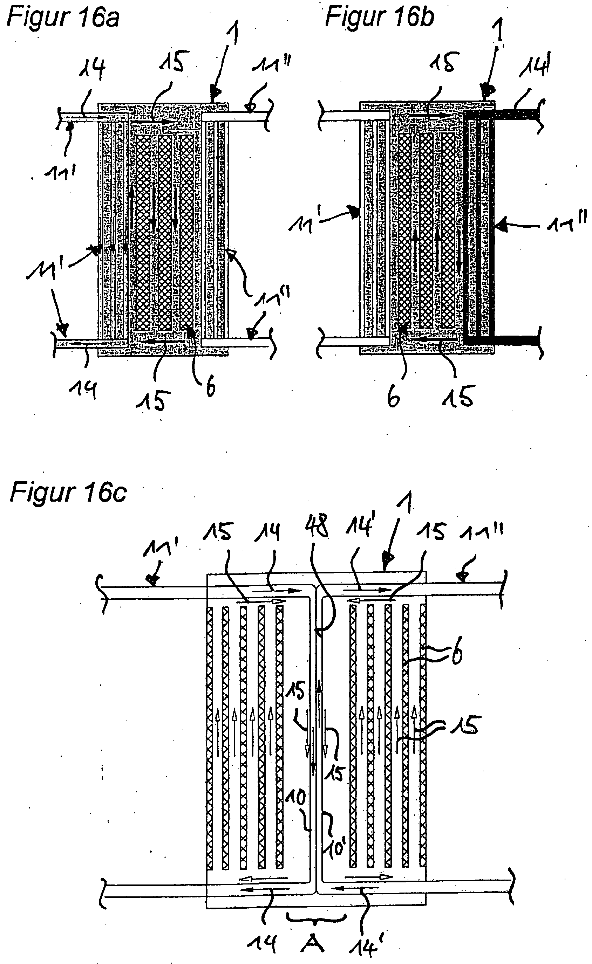

- Fig. 16 c: einen Längsschnitt durch eine Ausführungsform

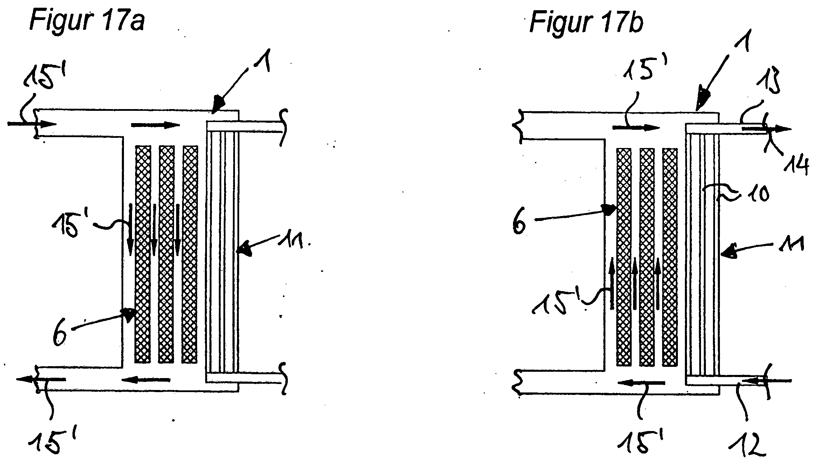

- Fig. 17a und b: jeweils einen Längsschnitt durch eine Ausführungsform in unterschiedlichen Betriebszuständen,

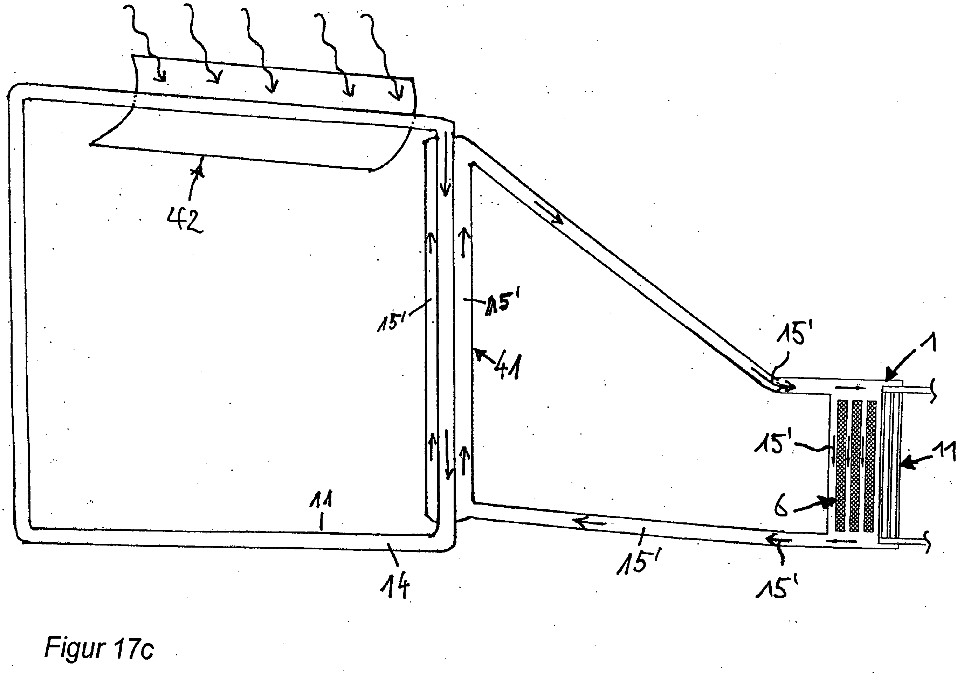

- Fig. 17c: in schematischer Darstellung eine Ausführungsform mit direkter Beladung des Speichermediums,

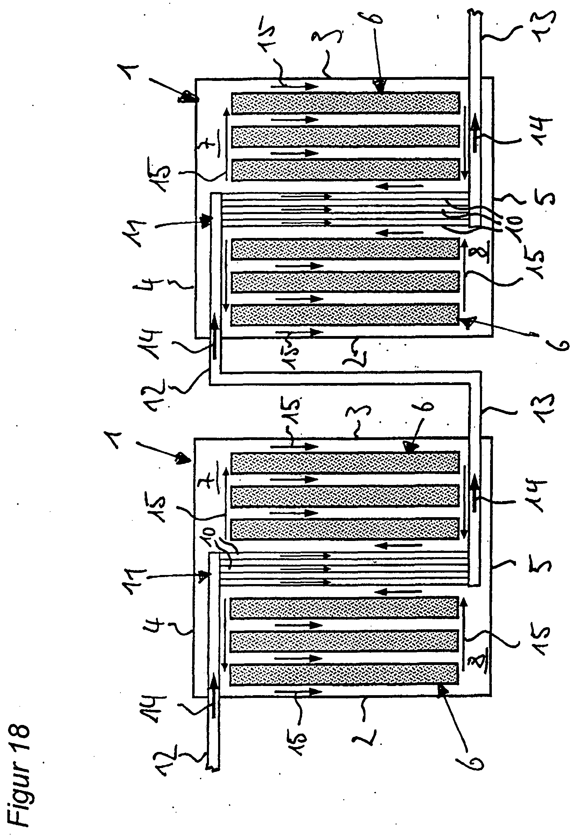

- Fig. 18: einen Längsschnitt durch eine Anlage aus mehreren in Reihe geschalteten Vorrichtungen,

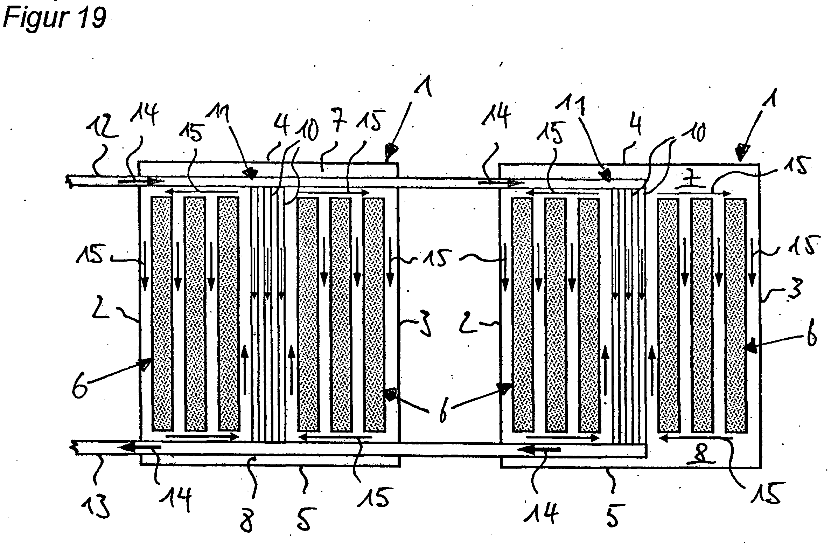

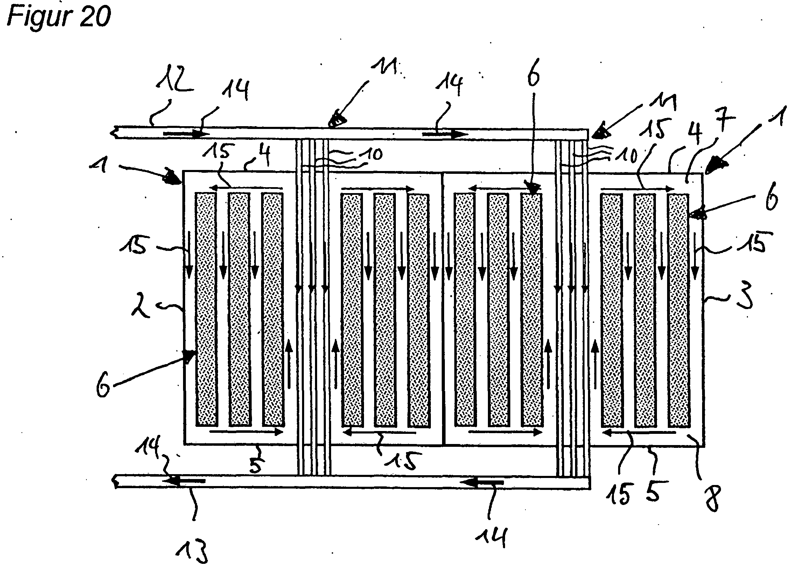

- Fig. 19 und 20: jeweils einen Längsschnitt durch eine Anlage aus mehreren parallel geschalteten Vorrichtungen, und

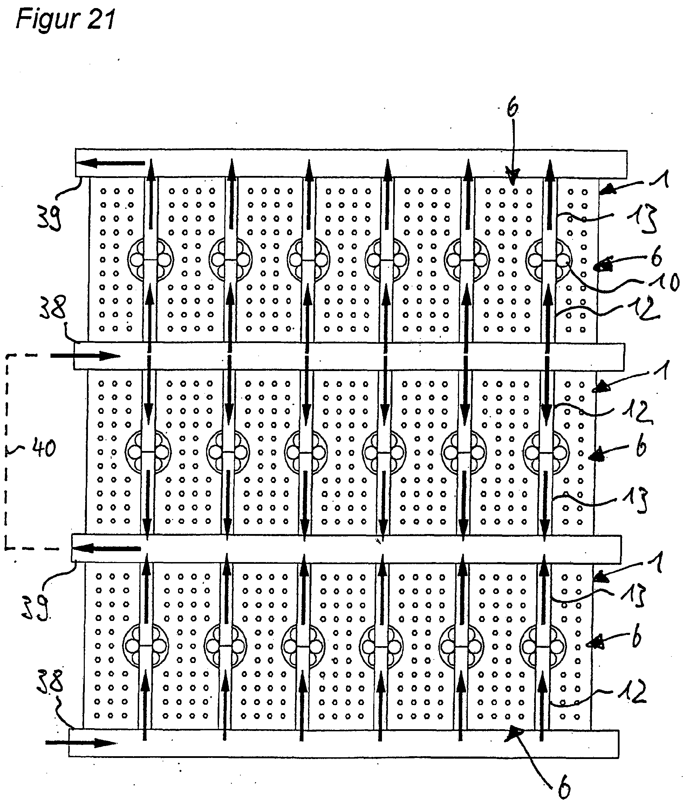

- Fig. 21: eine Draufsicht auf eine Anlage mit einer Vielzahl parallel geschalteter Vorrichtungen.

### Wege zur Ausführung der Erfindung:

Fig. 1 zeigt in schematischer Darstellung einen Vertikalschnitt durch eine Ausführungsform, anhand der das erfindungsgemäße Funktionsprinzip erläutert wird. Die Vorrichtung umfasst ein Gehäuse 1, dessen Seiten 2, 3, Deckel 4 und Boden 5 einen im wesentlichen gasdichten Raum umschließen. Innerhalb des Gehäuses 1 ist der Raum gegliedert in einen ersten, mittig zwischen den Seiten 2 und 3 gelegenen zentralen Teilbereich A und in einen zweiten sich vom ersten Teilbereich A bis jeweils zu den Seitenwänden 2 und 3 erstreckenden Teilbereich B.

Der zweite Teilbereich B dient zur Aufnahme eines Speichermediums 6, das in Querrichtung unmittelbar an den ersten Teilbereich A anschließt und das in Längsrichtung unter Bildung freier Zonen 7 und 8 im lichten Abstand zum Deckel 4 und Boden 5 endet. Das Speichermedium 6 ist von einer Vielzahl vertikal verlaufender, achsparalleler Strömungsraume in Form von Strömungskanälen 9 durchsetzt.

Im ersten Teilbereich A sieht man mehrere Rohrleitungen 10, die sich achsparallel von der freien Zone 7 zur freien Zone 8 erstrecken. Die Rohrleitungen 10 sind dabei Teil eines Rohrleitungssystems 11, zu dem auch die Zuleitung 12 gehört, die im Bereich der Zone 7 an die Enden der Rohrleitungen 10 anschließt und die Ableitung 13, die im Bereich der Zone 8 einen entsprechenden Anschluss bildet. Das Rohrleitungssystem 11 ist Bestandteil eines Kreislaufs, in den eine Wärmequelle und ein Wärmeverbraucher, beispielsweise eine Dampfturbine, integriert sind. Die Pfeile 14 versinnbildlichen das Arbeitsmedium, das als gasförmiger oder flüssiger Wärmeträger das Rohrleitungssystem 11 durchströmt. Im übrigen ist das Gehäuse 1 und damit der erste Teilbereich A, der zweite Teilbereich B, die Strömungskanäle 9 sowie die freien Zonen 7 und 8 von einem durch die Pfeile 15 versinnbildlichten Fluid ausgefüllt.

Zum Beladen des Speichermediums 6 mit thermischer Energie wird das Arbeitsmedium 14 im Kreislauf an einer Wärmequelle vorbeigeführt. Die Wärmequelle kann beispielsweise von Solarkollektoren gebildet sein, die ein innerhalb des Rohrleitungssystems 11 strömendes Wärmeträgeröl auf etwa 400° C erhitzen. Über die Zuleitung 11 gelangt das auf diese Weise mit thermischer Energie beladene Arbeitsmedium 14 zu den Rohrleitungen 10, die es von der Zone 7 zur Zone 8, also von oben nach unten, durch den ersten Teilbereich A der Vorrichtung führen, wobei es einen Teil der thermischen Energie abgibt.

Am Ende der Rohrleitungen 10 wird das Arbeitsmedium 14 in der Ableitung 13 gesammelt und zur erneuten Beladung zurück zur Wärmequelle geführt.

Das Fluid 15 strömt innerhalb des Gehäuses 1 ebenfalls im Kreislauf und passiert dabei zunächst den ersten Teilbereich A, wo durch den Kontakt mit den von dem Arbeitsmedium 14 aufgeheizten Rohrleitungen 10 ein Wärmeübergang vom wärmeren Arbeitsmedium 14 zum kälteren Fluid 15 statt findet. So aufgeheizt gelangt das Fluid 15 nach Durchströmen der freien Zone 7 in die Strömungskanäle 9 des Speichermediums 6. Auf diese Weise transportiert das Fluid 15 thermische Energie vom Arbeitsmedium 14 ins Innere des Speichermediums 6 und gibt diese beim Durchströmen der Strömungskanäle 9 an das Speichermedium 6 ab, das dabei nach und nach mit thermischer Energie beladen wird. Nach Austritt aus den Strömungskanälen 9 strömt das Fluid 15 über die freie Zone 8 zum ersten Teilbereich A zurück.

Der Entladevorgang erfolgt auf umgekehrte Weise, wobei in den Kreislauf des Arbeitsmediums 14 ein Verbraucher zwischengeschaltet ist, beispielsweise eine Dampfturbine. Das im Kreislauf geführte Fluid 15 wird vom thermisch beladenen Speichermedium 6 aufgeheizt und transportiert die thermische Energie in den ersten Teilbereich A, wo ein Wärmeaustausch mit dem Arbeitsmedium 14 stattfindet. Das Arbeitsmedium 14 bringt dann die thermische Energie zur Verbrauchsstelle.

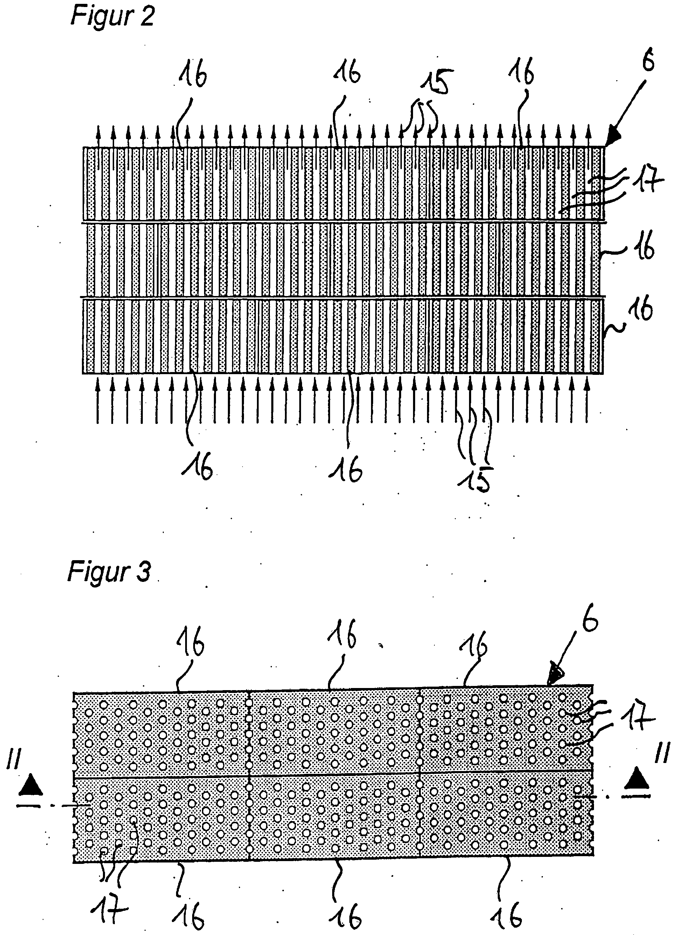

Dieses Grundprinzip liegt auch den nachfolgend unter den Fig. 2 bis 21 beschriebenen Ausführungsformen zugrunde.

Die Fig. 2 bis 5b zeigen Ausführungsformen, bei denen das von einem Feststoffkörper gebildete Speichermedium 6 aus Formkörpern 16 besteht. Die Fig. 2 und 3 zeigen dabei Formkörper 16 in Form von Quadern, die beispielsweise aus zementgebundenen Materialien, Ton, Schamott, Keramik oder Salzen wie zum Beispiel Natriumchlorid oder Kaliumchlorid hergestellt sein können. Jeder Formkörper 16 ist in vertikaler Richtung von parallel zueinander verlaufenden Strömungskanälen 17 durchzogen, die im vorliegenden Fall kreisförmigen Querschnitt besitzen, zur Vergrößerung der Wärmeübergangsfläche jedoch auch anderen Querschnitt aufweisen oder mit in den Strömungskanal 17 überstehenden Stegen versehen sein können. Bei einem Speichermedium 6 aus Beton können die Strömungskanäle 9 beispielsweise einen Durchmesser von etwa 2 cm aufweisen. Benachbarte Strömungskanäle 9 können dabei im Dreieck im einheitlichen Abstand zwischen 3 cm und 20 cm, vorzugsweise zwischen 6 cm und 8 cm, angeordnet sein.

Zur Herstellung des Speichermediums 6 ist eine Vielzahl von Formkörpern 16 lagenweise nebeneinander und übereinander zusammengefügt, wobei Formkörper 16 benachbarter Lagen mit Versatz der vertikalen Stoßfugen angeordnet sind. Dabei wird eine relative Lage der Formkörper 16 zueinander eingehalten, bei der die Strömungskanäle 17 benachbarter Formkörper 16 fluchten. Auf diese Weise bilden die Strömungskanäle 17 der einzelnen Formkörper 16 durchgehende Strömungsräume, die das Speichermedium 6 vollständig durchsetzen.

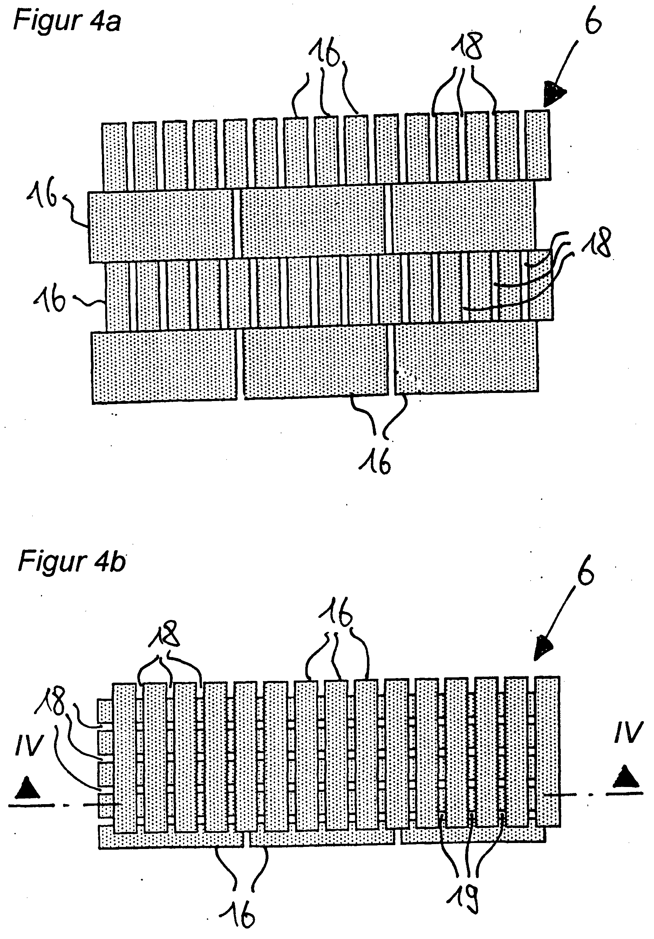

Bei der in den Fig. 4a und 4b dargestellten Ausführungsform des Speichermediums 6 besitzen die einzelnen Formkörper 16 jeweils eine ausgeprägte Längserstreckungsrichtung, weisen also stab- oder riegelförmige Gestalt auf und können sowohl mit als auch ohne Strömungskanäle 17 hergestellt sein. Diese Formkörper 16 sind innerhalb des Speichermediums 6 in mehreren Lagen übereinander gestapelt, wobei die Formkörper 16 einer jeden Lage parallel und im Abstand zueinander angeordnet sind. Auf diese Weise ergeben sich zwischen den einzelnen Formkörpern 16 einer Lage Strömungsspalte 18. Die Formkörper 16 zweier vertikal benachbarter Ebenen sind dabei über Kreuz gelegt, so dass auch die Strömungsspalte 18 von einer Ebene zur anderen sich kreuzen.

Der Strömungsraum eines von solchen Formkörpern 16 gebildeten Speichermediums 6 setzt sich zusammen aus einer Vielzahl parallel zueinander verlaufender Strömungsspalte 18, deren Längserstreckungsrichtung von einer Ebene zur nächsten wechselt, vorzugsweise um etwa 90°. Aufgrund der sich dabei ergebenden kreuzenden Anordnung entstehen vom Übergang einer Ebene zur nächsten punktuelle Durchtrittsöffnungen 19, die in die Strömungsspalte 18 der darauf folgenden Ebene münden. Die sich auf diese Weise ergebenden Strömungsräume bewirken eine von Ebene zu Ebene wechselnde Querverteilung des Fluids 15 in den einzelnen Strömungsspalten 18, was zu einer gleichmäßigen Beaufschlagung des Speichermediums 6 mit thermischer Energie insgesamt führt.

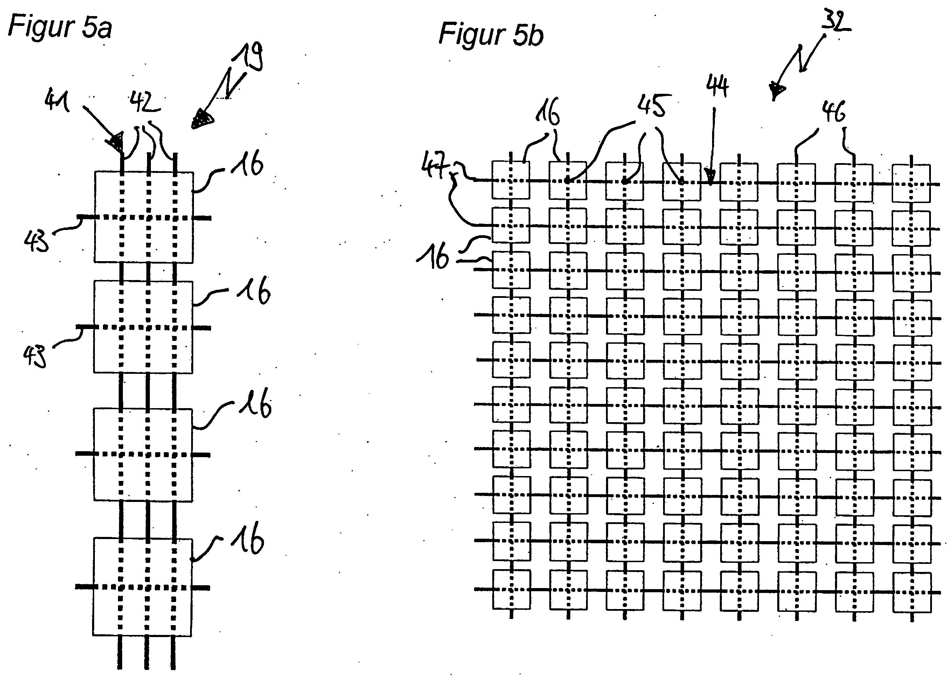

Fig. 5a offenbart eine Ausführungsform mit einer eindimensionale Anordnung einer Vielzahl von Formkörpern 16 entlang eines Stranges 41, die auf diese Weise zu einem linearen Modul 19 zusammengefasst sind. Eine Vielzahl solcher Module 19 können in eine Vorrichtung zur Bildung des Speichermediums 6 aufgehängt werden. Der Strang 41 wird von drei parallel verlaufenden Bewehrungsstäben 42 gebildet, die die einzelnen Formkörper 16 durchdringen. Die Formkörper 16 besitzen beispielsweise quaderförmige, insbesondere würfelförmige Gestalt, deren Seitenflächen konkav oder konvex verlaufen können. Formkörper 16 mit Kugel- oder Ellipsoidform zeichnen sich dagegen durch einen geringeren Strömungswiderstand aus.

Zur Herstellung dieser Moduln 19 wird bei Formkörpern 16 aus Salz der Formkörper 16 unter Hitze gegen den oder die Bewehrungsstäbe 42 gedrückt, die auf diese Weise allmählich in den Formkörper 16 eindringen. Bei Formkörpern 16 aus Beton wird der oder die Bewehrungsstäbe 42 im Zuge des Betonierens eingegossen. Der auf diese Weise sich ergebende Verbund zwischen Bewehrungsstäben 42 und Formkörper 16 birgt die Gefahr, dass bei Temperaturbeaufschlagung des Speichermediums 6 Schäden infolge unterschiedlicher Längenänderung von Bewehrungsstäben 42 und Formkörper 16 entstehen. Gemäß der Erfindung sind daher ausreichend kleine Formkörper 16 vorgesehen, bei denen solche Erscheinungen noch nicht auftreten. Unter diesem Gesichtspunkt beträgt die größte Außenabmessung eines von einem Bewehrungsstab 42 durchdrungenen Formkörpers 16 aus Salz oder Beton weniger als 30 cm, vorzugsweise weniger als 20 cm.

Eine nicht dargestellte Variante sieht zur Vermeidung derartiger Schäden vor, den oder die Bewehrungsstäbe mit einer Beschichtung, beispielsweise aus einem geeigneten Kunststoff, zu versehen, die entweder bei Betriebstemperatur der Vorrichtung schmilzt beziehungsweise verdampft und damit einen Bewegungsspalt schafft oder einen geringen Reibbeiwert aufweist. Eine solche Ausführungsform lässt somit Relativbewegungen zwischen Formkörper und Strang zu, so dass auch größere Formkörper verwendet werden können.

Damit die einzelnen Formkörper 16 dauerhaft in gegenseitigem Abstand am Strang 41 gehalten sind, sind in Figur 5a Querstäbe 43 vorgesehen, die die Formkörper 16 ebenfalls durchdringen und auf einer bestimmten Höhe gegenüber dem Strang 41 fixiert sind, was im einfachsten Fall durch eine Punktschweißung im Kreuzungspunkt mit dem Strang 41 geschieht.

In Fig. 5b ist ein flächiger Modul 32 dargestellt, also mit zweidimensionaler Erstreckung. Zur Bildung des Speichermediums 6 werden eine Vielzahl solcher Moduln 32 planparallel und in seitlichem Abstand zueinander in einer Vorrichtung aufgehängt. Wesentlicher Bestandteil des Moduls 32 ist ein Gitter 44, vorzugsweise in Form einer Bewehrungsmatte. In den von den Vertikalstäben 46 und Querstäben 47 gebildeten Knotenpunkten 45 sind die einzelnen Formkörper 16 angeordnet. Ansonsten gleicht diese Ausführungsform in weiten Teilen der unter Fig. 5a beschriebenen, so dass das dort Gesagte entsprechend gilt.

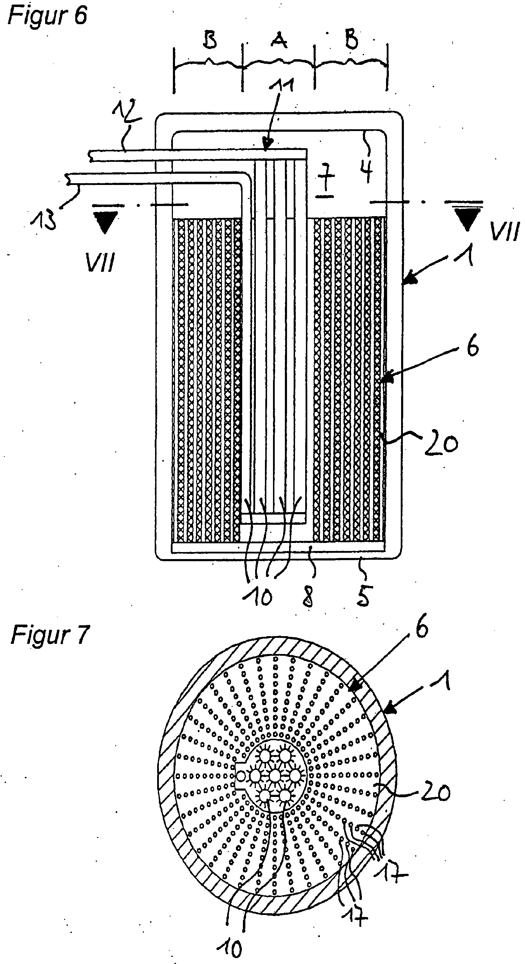

Die Fig. 6 und 7 offenbaren eine Ausführungsform mit zylindrischem Gehäuse 1, das stirnseitig durch den Deckel 4 und Boden 5 verschlossen ist. Das Gehäuse 1 besitzt Kreisquerschnitt und kann beispielsweise aus einem Betonfertigteil bestehen.

Im Gehäuseinneren dient ein einstückiger Feststoffkörper 20 als Speichermedium 6. Der Feststoffkörper 20 kann dabei vorgefertigt und im Zuge der Herstellung des Wärmespeichers als Fertigteil in das Gehäuse 1 eingesetzt werden. Alternativ ist auch eine Herstellung des Feststoffkörpers 20 vor Ort möglich, beispielsweise durch Betonieren.

Der Feststoffkörper 20 besitzt die Gestalt eines dickwandigen Hohlzylinders, wobei die Zylinderwand dem zweiten Teilbereich B und der von der Zylinderwand umschlossene Hohlraum entlang der Zylinderlängsachse dem ersten Teilbereich A entspricht. Durch Einhalten eines axialen Abstandes zum Deckel 4 und Boden 5 ergeben sich wiederum freie Zonen 7 und 8 innerhalb des Gehäuses 1.

Zur Bildung des Strömungsraums weist der Feststoffkörper 20 eine Vielzahl von achsparallel verlaufenden Strömungskanälen 17 auf, die die freie Zone 7 mit der freien Zone 8 verbinden. Wie aus Fig. 7 ersichtlich, liegen die Strömungskanäle 17 strahlenförmig auf Umfangskreisen unterschiedlicher Radien. Daraus ergibt sich zum Inneren des Feststoffkörpers 20 hin eine auf den Querschnitt bezogene größere Dichte an Strömungskanälen 17, als dies im äußeren Umfangsbereich des Feststoffkörpers 20 der Fall ist. Ein solcher Feststoffkörper 20 erreicht daher im Inneren, dem ersten Teilbereich A zugewandten Bereich, zuerst seine maximale Speicherkapazität. Will man eine über den Querschnitt des Feststoffkörpers einheitliche Beladung erzielen, so ist es denkbar, den Querschnitt oder die Anzahl bzw. die Dichte der Strömungskanäle 17 in den äußeren Umfangsbereichen zu vergrößern, um dort eine intensivere Durchströmung mit Fluid 15 zu erreichen. Bei einem Speichermedium 6 aus Beton können die Strömungskanäle 17 beispielsweise einen Durchmesser von etwa 2 cm aufweisen.

Eine andere nicht dargestellte Anordnung der Strömungskanäle 17 sieht vor die auf zwei benachbarten Umfangskreisen angeordneten Strömungskanäle 17 mit einem Winkelversatz zueinander anzuordnen, so dass ein Strömungskanal 17 des ersten Umfangskreis in radialer Richtung mittig zwischen zwei Strömungskanälen 17 des zweiten Umfangskreis liegt. Daraus ergibt sich eine im Querschnitt jeweils dreieckförmige Anordnung der Strömungskanäle 17 mit einheitlichen Abständen, die im Falle von Beton als Material für das Speichermedium 6 beispielsweise zwischen 3 cm und 20 cm, vorzugsweise zwischen 6 cm und 8 cm, liegen können.

Der sich entlang der Zylinderlängsachse erstreckende erste Teilbereich A ist von achsparallelen Rohrleitungen 10 durchzogen, in denen das Arbeitsmedium 14 den Teilbereich A mehrmals durchströmt. Beschickt werden die Rohrleitungen 10 über die gemeinsame Zuleitung 12. Die Rückführung des Arbeitsmediums 14 zu einer Wärmequelle oder einem Wärmeverbraucher erfolgt über die Ableitung 13, die bei dieser Ausführungsform auf der gleichen Seite des Speichermediums 6 angeordnet ist wie die Zuleitung 12. So kann das Rohrleitungssystem 11 bei abgenommenem Deckel 4 mit dem von den Rohren 10 gebildeten Teil von dieser Seite in den ersten Teilbereich A axial eingeführt werden, wodurch sich Montage und Demontage der Vorrichtung ganz wesentlich vereinfachen. Die Funktionsweise der in den Fig. 6 und 7 dargestellten Ausführungsform entspricht ansonsten der unter Fig. 1 beschriebenen.

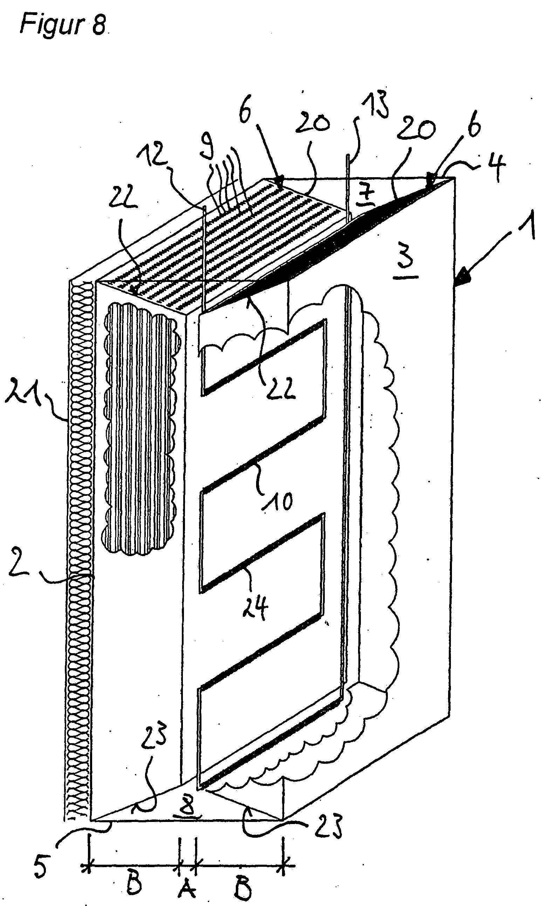

Eine Ausführungsform der Erfindung ist in Fig. 8 dargestellt. Diese besitzt ein quaderförmiges Gehäuse 1, dessen Außenseite von einer in Fig. 8 lediglich partiell angedeuteten Wärmedämmung 21 umgeben ist. Um den inneren Aufbau der Vorrichtung besser darzustellen, ist eine transparente und teilweise aufgebrochene Darstellungsart gewählt.

Das Innere des Gehäuses 1 ist wiederum in einen ersten sich in einer Ebene erstreckenden Teilbereich A und zweiten Teilbereich B gegliedert. Der zweite Teilbereich B ist von zwei plattenförmigen monolithischen Feststoffkörpern 20 gebildet ist, die sich planparallel im seitlichen Abstand gegenüber liegen und den ersten Teilbereich A sandwichartig einschließen. Die obere Stirnseite 22 und untere Stirnseite 23 des Feststoffkörpers 20 verlaufen jedoch nicht parallel zum Deckel 4 bzw. Boden 5 des Gehäuses 1, sondern bilden eine Schräge, wobei der axiale Abstand zum Deckel 4 bzw. Boden 5 in Richtung zur Mittelebene zunimmt. Auf diese Weise ergeben sich freie Zonen 7 und 8, die einen dreieckförmigen Querschnitt besitzen. Diese Ausführungsform trägt der Tatsache Rechnung, dass der Fluidstrom 15 volumenmäßig zu den Gehäuseseiten 2 und 3 hin geringer wird und durch Verkleinerung der Fließquerschnitte eine gleichmäßige Durchströmung erzeugt wird. Die beiden Feststoffkörper 20 sind wiederum von einer Vielzahl achsparalleler Strömungskanäle 9 durchzogen, die mit ihren Enden in die freie Zone 7 bzw. freie Zone 8 münden. Bei einem Speichermedium 6 aus Beton können die Strömungskanäle 9 beispielsweise einen Durchmesser von etwa 2 cm aufweisen. Benachbarte Strömungskanäle 9 können dabei im Dreieck im einheitlichen Abstand zwischen 3 cm und 20 cm, vorzugsweise zwischen 6 cm und 8 cm, angeordnet sein.

Die Feststoffkörper 20 können alternativ zu einer monolithischen Ausbildung auch von Formkörpern 16 gebildet sein, wie sie beispielsweise unter den Fig. 2 bis 5b bereits beschrieben worden sind.

Der Raum zwischen Feststoffkörpern 20 entspricht dem ersten Teilbereich A. Dort sieht man eine Zuleitung 12, die in eine in horizontalen Schleifen gelegte Rohrleitung 10 übergeht und die als Ableitung 13 aus dem Gehäuse 1 führt. Die horizontalen Abschnitte der Rohrleitung 10 besitzen den Außenumfang umlaufende Rippen 24, um durch Vergrößerung der Kontaktfläche mit dem Fluid 15 einen besseren Wärmeaustausch zu ermöglichen.

Auch bei der in Fig. 8 dargestellten Vorrichtung ist das unter Fig. 1 beschriebene Funktionsprinzip verwirklicht.

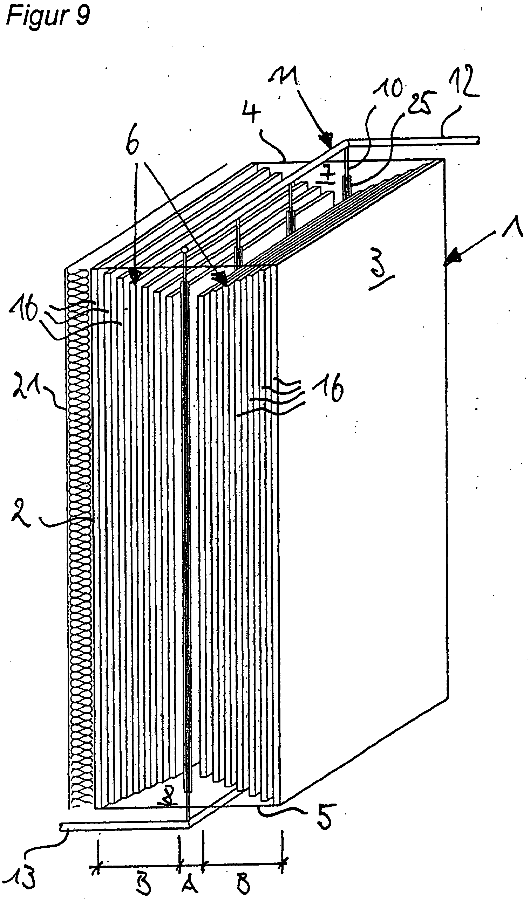

Die in Fig. 9 gezeigte Ausführungsform der Erfindung entspricht in großen Teilen der unter Fig. 8 beschriebenen, so dass das dort Gesagte gilt. Wesentliche Unterschiede ergeben sich aus der aufgelösten Bauweise des Speichermediums 6. Das Speichermedium 6 besteht aus plattenförmigen Formkörpern 16 geringer Dicke, die im zweiten Teilbereich B planparallel und im Abstand zueinander angeordnet sind. Die Strömungsräume für das Fluid 15 sind durch den lichten Abstand der Formkörper 16 gebildet, das heißt das Fluid 15 durchströmt das Speichermedium 6 zwischen den plattenförmigen Formkörpem 16. Bei Formkörpern 16 aus Beton kann die Plattendicke beispielsweise zwischen 2 cm und 10 cm, vorzugsweise zwischen 3 cm und 5 cm, liegen und der gegenseitige Abstand der plattenförmigen Formkörper 16 zwischen 1 cm und 2 cm.

Ein weiterer Unterschied betrifft den ersten Teilbereich A. Das dort verlaufende Rohrleitungssystem 11 umfasst mehrere, in vorbestimmtem Abstand achsparallel zueinander angeordnete Rohrleitungen 10, die an ihrem einen Ende über die gemeinsame als Verteiler wirkende Zuleitung 12 mit dem Arbeitsmedium 14 versorgt werden und am gegenüberliegenden Ende in die als Sammler fungierende Ableitung 13 münden. Jede Rohrleitung 10 besitzt mehrere Längsrippen 25, die vorzugsweise in gleichmäßigen Winkelabständen axial entlang des Umfangs der Rohrleitungen 10 verlaufen.

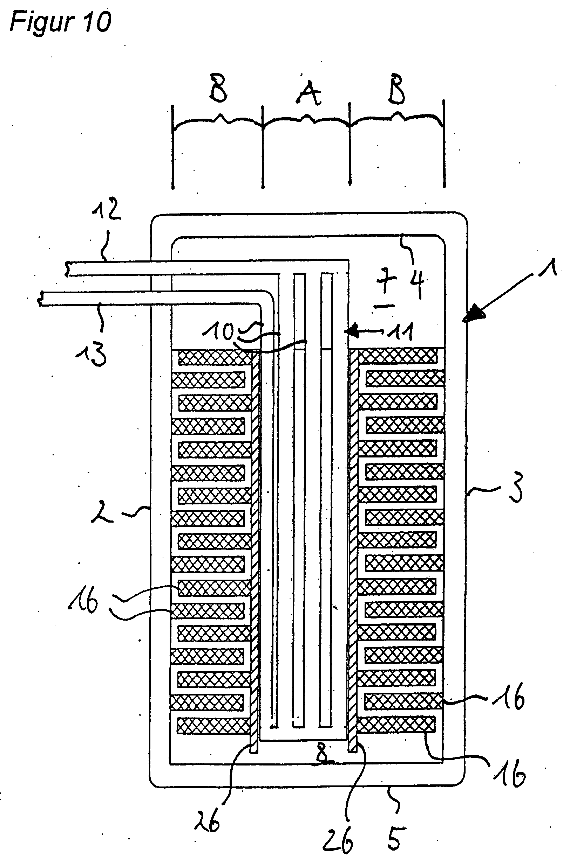

Fig. 10 gibt einen Längsschnitt durch eine Ausführungsform wieder, bei der das Gehäuse 1 und das Speichermedium 6 zylindrische Gestalt ähnlich der Ausführungsformen gemäß Fig. 6 und 7 oder aber auch einen sandwichartigen Aufbau entsprechend der Ausführungsformen gemäß Fig. 8 und 9 besitzen kann. Die Besonderheit dieser Ausführungsform besteht darin, dass der zweite Teilabschnitt B begrenzt ist von inneren Wänden 26 und den Seiten 2, 3. In dem Raum zwischen den Wänden 26 und den Seiten 2 und 3 ragen in horizontal verlaufenden, axial gestaffelten Ebenen ringscheibenförmige bzw. plattenförmige Formkörper 16, die in vertikaler Richtung wechselweise an den inneren Wänden 26 bzw. den Seiten 2 und 3 befestigt sind, und zwar derart, dass die an der inneren Wand 26 befestigten Formkörper 16 kammartig unter Einhaltung eines allseitigen Abstandes in die Zwischenräume zwischen den Formkörpem 16 der Seiten 2 und 3 hinein ragen. Durch Einhaltung eines lichten Abstandes sowohl in vertikaler Richtung zu benachbarten Formkörpern 16 als auch in dazu lotrechter Richtung zur inneren Wand 26 bzw. zu den Seiten 2 und 3 ergibt sich ein mäandrierender Strömungsraum, den das Fluid 15 bei der Be- bzw. Entladung des Speichermediums 6 durchströmt. Das Rohrleitungssystem 11 entspricht im Falle einer zylindrischen Vorrichtung dem unter den Fig. 6 und 7 beschriebenen, so dass auf den dortigen Teil der Beschreibung verwiesen wird. Im Falle einer sandwichförmigen Konstruktionsweise kann auch ein Rohrleitungssystem gemäß der Fig. 8 und 9 Verwendung finden.

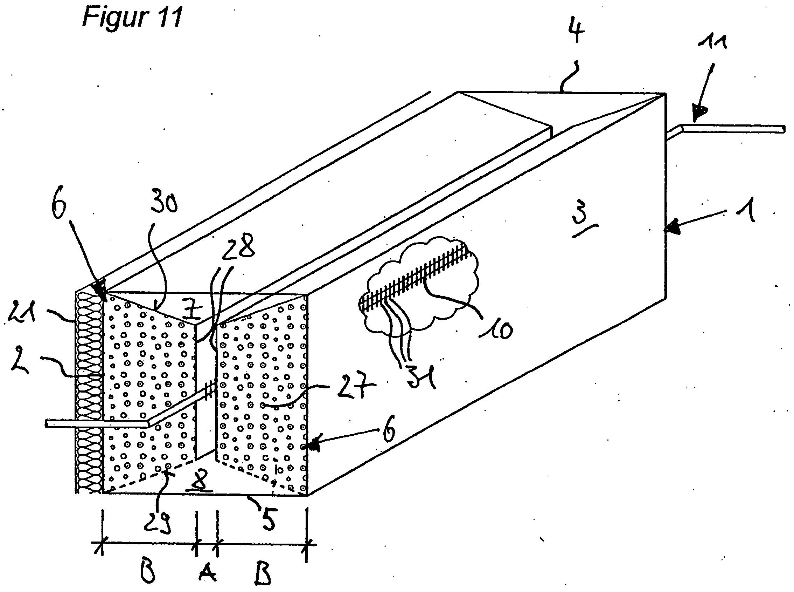

Während bei den bisher beschriebenen Ausführungsformen das Speichermedium 6 von einem insgesamt starren Körper gebildet ist, offenbart Fig. 11 eine Ausführungsform, bei der Schüttgut 27 zur Speicherung der thermischen Energie Verwendung findet. Zu diesem Zweck verlaufen Körbe 28 entlang der Seiten 2 und 3 und bilden auf diese Weise den zweiten Teilbereich B. Die Unterseite 29 und Oberseite 30 der Körbe 28 verlaufen zur Mitte hin mit zunehmendem Abstand zum Deckel 4 bzw. Boden 5, wodurch die freien Zonen 7 und 8 entstehen. Die Unterseite 29 ist mit einer Vielzahl von Öffnungen versehen, die den Ein- bzw. Austritt des Fluids 15 ermöglichen. Die Oberseite 30 kann entsprechend ausgebildet sein oder aber auch offen bleiben. Die Körbe 28 sind jeweils mit Schüttgut 27 befüllt, das vielfältiger Natur sein kann. Beispielsweise kommen mineralische oder metallische Materialien in Frage. Die miteinander kommunizierenden Hohlräume zwischen den einzelnen Schüttgutelementen ergeben einen zusammenhängenden Strömungsraum, den das Fluid 15 zur Durchströmung nutzt.

Zur Bildung des ersten Teilbereichs A halten die Körbe 28 einen gegenseitigen Abstand ein, welcher von dem Rohrleitungssystem 11 durchsetzt ist. Zur Verbesserung des Wärmeübergangs von der Rohrleitung 10 des Rohrleistungssystems 11 auf das Fluid 15 weist die Rohrleitung 10 eine Vielzahl den Rohrumfang umlaufender Rippen 31 auf.

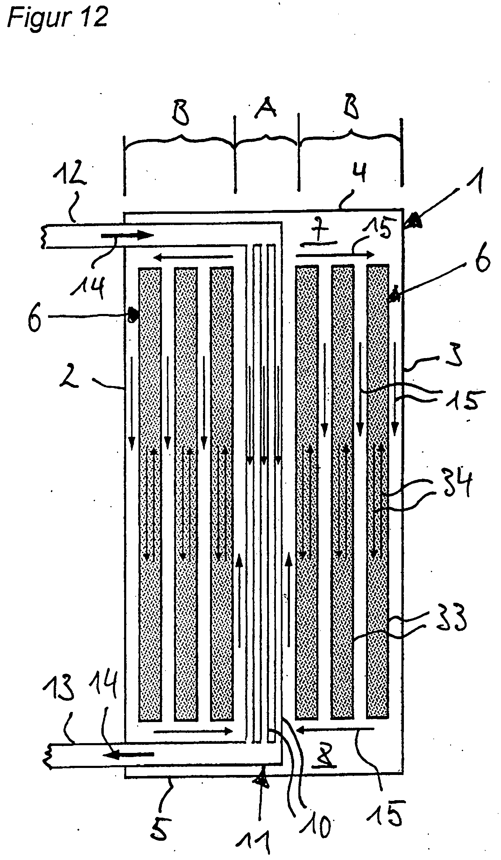

Ein im Hinblick auf die Wärmeverteilung im Speichermedium 6 besonders vorteilhafte Ausführungsform zeigt Fig. 12 in schematischer Darstellung. Das im zweiten Teilbereich B angeordnete Speichermedium 6 wird von hohlplattenförmigen oder hohlzylindrischen Behältnissen 33 gebildet, beispielsweise von stirnseitig verschlossenen Rohren. Die Behältnisse 33 sind vorteilhafterweise dünnwandig ausgebildet und bestehen aus einem thermisch gut leitenden Material wie zum Beispiel Metall und sind mit einem bei Betriebstemperatur flüssigen Stoff wie zum Beispiel Schwefel, Flüssigsalz oder Thermoöl befüllt. Der Strömungsraum ergibt sich aus den Abständen der Behältnisse 33 untereinander. Das Gehäuse 1 mit dem ersten Teilbereich A und den Zonen 7 und 8 sowie dem Rohrleitungssystem 11 entspricht weitestgehend dem unter Fig. 1 Gesagten, so dass auf diesen Teil der Beschreibung Bezug genommen wird.

Bei einem auf diese Weise gebildeten Speichermedium 6 besteht der weitaus größte Volumenanteil aus Flüssigkeit, so dass die Wärmeverteilung innerhalb des Speichermediums 6 durch Konvektion erfolgen kann, was durch die Pfeile 34 angedeutet ist. Eine solche Ausführungsform kann daher sehr schnell die gespeicherte Energie zur Verfügung stellen bzw. damit beladen werden.

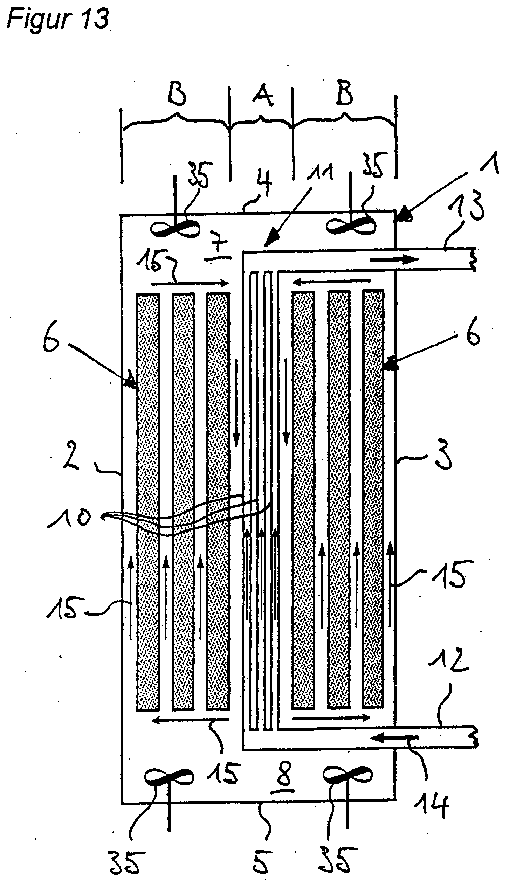

Die Fig. 13, 14 und 15 betreffen Maßnahmen zur Regelung und Steuerung der Fluidströmung 15 innerhalb des Gehäuses 1. Im Idealfall setzt durch geeignete konstruktive Ausbildung der Teilbereiche A und B eine natürliche Konvektion des Fluids 15 ein.

Falls die natürliche Konvektion als treibende Kraft für die Kreislaufströmung nicht ausreicht, sieht die Ausführungsform gemäß Fig. 13 vor, die Druckverhältnisse innerhalb des Gehäuses 1 durch ein oder mehrere Saug- und/oder Druckgebläse 35 zu beeinflussen. Diese können innerhalb der freien Zone 7 und/oder 8 angeordnet sein oder es münden Saug- bzw. Druckleitungen in diese Bereiche. Fig. 13 zeigt diese Maßnahme in Verbindung mit einer Ausführungsform gemäß Fig. 1, was jedoch nicht ausschließt, dass Saug- und/oder Druckgebläse 35 auch in Kombination mit den übrigen Ausführungsformen eingesetzt werden können.

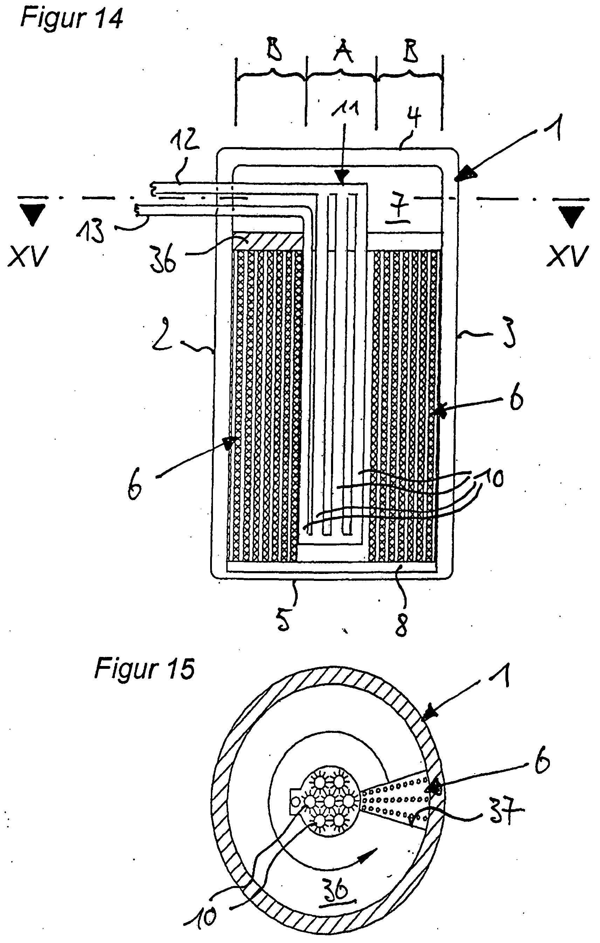

Die Fig. 14 und 15 zeigen eine Ausführungsform im Längs- und Querschnitt, bei der das Fluid 15 zum Be- und Entladen konzentriert in beliebige Teilbereiche des Speichermediums 6 geleitet werden, während der Restbereich inaktiv ist. Zu diesem Zweck ist eine blendenartige Ringscheibe 36 mit sektorförmiger Öffnung 37 (Fig. 15) vorgesehen, die die Oberseite oder Unterseite des Speichermediums 6 bedeckt. Durch eine drehbare Lagerung der Ringscheibe 36 ist es möglich, die Öffnung 37 zu verstellen, so dass eine Fluidströmung 15 immer nur in dem von der Öffnung 37 freigegebenen Teilbereich des Speichermediums 6 in Gang kommt, mit dem Ergebnis einer partiellen Be- bzw. Entladung. Durch langsames kontinuierliches oder schrittweises Drehen der Ringscheibe 36 wird auf diese Weise das Speichermedium 6 nach und nach befüllt bzw. entladen, und zwar jeweils mit der maximal möglichen Wärmemenge.

Die Fig. 14 und 15 betreffen eine Umsetzung dieses Gedankens in Verbindung mit einem zylindrischen Gehäuse 1 und einer rotierenden Ringscheibe 36. Ebenso könnte bei sandwichartig ausgebildeten Ausführungsformen der Erfindung ein linear verschiebliches Element mit Öffnung zum Einsatz kommen.

Die Fig. 16a, b und c zeigen Ausführungsformen der Erfindung mit zwei getrennten Wärmekreisläufen für das Arbeitsmedium 14 bzw. 14'. In Fig. 16a sieht man ein erstes Rohrleitungssystem 11', das das mit thermischer Energie beladene Arbeitsmedium 14 zum Speichermedium 6 leitet. Dort findet ein Wärmeaustausch mit dem Fluid 15 statt, das wiederum das Speichermedium 6 belädt. Dieser Betriebszustand ist in Fig. 16a dargestellt.

Fig. 16b gibt den Betriebszustand des Entladens wieder, wozu ein zweites Rohrleitungssystem 11" mit einem Arbeitsmedium 14' befüllt ist, das sich in seiner Art vom Arbeitsmedium 14 des Beladekreislaufs unterscheiden kann. Beim Entladen des Speichers wird die im Speichermedium 6 vorhandene thermische Energie über das Fluid 15 an das Rohrleitungssystem 11" und damit das Arbeitsmedium 14' gegeben.

In Fig. 16c ist eine Abwandlung dargestellt, bei der das erste Rohrleitungssystem 11' und das zweite Rohrleitungssystem 11" über die Länge des Teilbereichs A eine gemeinsame Kontaktfläche 48 ausbilden, beispielsweise indem die Rohrleitungen 10' und 10" unter Kontakt aneinander liegen. Auf diese Weise wird von dem Arbeitsmedium 14 nicht nur das Fluid 15 aufgeheizt, sondern auch das im zweiten Rohrleitungssystem 11" strömende Arbeitsmedium 14', das die vorhandene thermische Energie einem Arbeitsprozess zuführt.

Da das Rohrleitungssystem 11' und Rohrleitungssystem 11" zwei voneinander getrennte Kreisläufe bilden, ist der Einsatz unterschiedlicher Arbeitsmedien 14, 14' in den Rohrleitungssystemen 11', 11" möglich, beispielsweise Thermoöl, Flüssigsalz oder Luft als Arbeitsmedium 14 und Wasser oder Wasserdampf als Arbeitsmedium 14'.

Aus den Fig. 17a und b geht hervor, dass eine erfindungsgemäße Vorrichtung auch direkt mit thermischer Energie be- bzw. entladen werden kann. Fig. 17a zeigt den Beladekreislauf, bei dem ein thermisch energiereiches Fluid 15' direkt und ohne Zwischenschaltung eines Rohrleitungssystems bzw. Arbeitsmediums zum Speichermedium 6 geführt wird. Das Fluid 15' besteht beispielsweise aus den Abgasen eines Verbrennungsprozesses oder der Flüssigkeit eines Kühlkreislaufs, deren Restwärme zum Aufheizen des Speichermediums 6 genutzt werden kann. Das Fluid 15' kann auch direkt in einer thermischen Anlage wie zum Beispiel einem Sonnenkollektor erhitzt werden.

Wie die in Fig. 17c dargestellte Variante zeigt, kann das Fluid 15' auch durch Wärmetausch mit einem in einem primären Wärmekreislauf geführten Arbeitsmedium 14 aufgeheizt werden. Dazu wird das Fluid 15' im Gegenstrom zum Wärmeträgermedium geführt, beispielsweise durch einen Rohr-in-Rohr-Abschnitt als Wärmetauscher 41. Als Wärmequelle im primären Wärmekreislauf kann zum Beispiel ein Sonnenkollektor 42 dienen. Das im Wärmetauscher erhitzte Fluid 15' wird dann in einem weiteren Wärmekreislauf direkt dem Speichermedium 6 aufgegeben.

In Fig. 17b ist der Entladevorgang eines solchen Wärmespeichers dargestellt, bei dem das Fluid 15' dazu genutzt wird, die thermische Energie aus dem Speichermedium 6 in das Rohrleitungssystem 11 zur weiteren Verwendung einzuleiten.

Die direkte Einleitung eines Fluids in eine erfindungsgemäße Vorrichtung kann auch mit den bereits zuvor beschriebenen Ausführungsformen der Erfindung kombiniert werden, das heißt, das Speichermedium 6 wird in diesen Fällen nicht nur von dem direkt eingeleiteten Fluid 15' mit Wärme beladen, sondern auch über ein Rohrleitungssystem 11, das ein entsprechend heißes Arbeitsmedium 14 führt.

Die Fig. 18 bis 21 zeigen Anlagen, die aus zwei oder mehr der zuvor beschriebenen erfindungsgemäßen Vorrichtungen zusammengesetzt sind. Fig. 18 offenbart dabei eine Anordnung zweier erfindungsgemäßer Vorrichtungen, die von dem Arbeitsmedium 14 nacheinander durchflossen werden. Dies wird erreicht, indem der Ablauf 13 der zunächst durchflossenen Vorrichtung in den Zulauf 12 der nachfolgenden Vorrichtung mündet. Bei einer solchen Anordnung werden die zuerst durchströmten einzelnen Vorrichtungen zuerst mit der vollen thermischen Energie beladen, so dass dort zu einem verhältnismäßig frühen Zeitpunkt die maximale Temperatur erreicht wird und daher auch entsprechend früh wieder abgerufen werden kann.

Davon unterscheiden sich die in den Fig. 19 und 20 dargestellten Ausführungsformen durch eine Parallelschaltung der einzelnen erfindungsgemäßen Vorrichtungen, die über eine gemeinsame, als Verteiler wirkende Zuleitung 12 mit Arbeitsmedium 14 versorgt werden. Von der Zuleitung 12 zweigen jeweils Rohrleitungen 10 in den ersten Teilbereich A einer jeden Vorrichtung ab. Auf der gegenüberliegenden Seite des Arbeitsmediums 6 münden die Rohrleitungen 10 in eine gemeinsame, als Sammelleitung wirkende Ableitung 13. Während in Fig. 19 die Zuleitung 12 und Ableitung 13 innerhalb des Gehäuses 1 verlaufen, zeigt Fig. 20 eine Ausführungsform, bei der die Zuleitung 12 und Ableitung 13 außerhalb des Gehäuses 1 geführt sind.

In Fig. 21 ist eine zellenartig aufgebaute Anlage zu sehen, wobei die Zellen jeweils von einer unter den Fig. 1 bis 17 beschriebenen Vorrichtung gebildet sind, die zur Bildung der Anlage in Reihen dicht nebeneinander angeordnet sind. Über großvolumige Verteilerleitungen 38, von denen aus Zuleitungen 12 zu den einzelnen ersten Teilbereichen A führen, werden die Zellen in der zuvor beschriebenen Art und Weise mit thermischer Energie beschickt und beladen. Über die Ableitungen 13 und die Sammelleitungen 39 wird das Arbeitsmedium 14 wieder zurück geführt. Auf diese Weise ergibt sich eine Parallelschaltung aller an dieselbe Verteilerleitung 38 bzw. Sammelleitung 39 angeschlossenen Zellen.

Auch eine kombinierte Reihen-/Parallelschaltung der Zellen ist möglich, beispielsweise indem das Arbeitsmedium 14 einer Sammelleitung 39 in eine Verteilerleitung 38 eingeleitet wird. Diese Variante wird durch die in Figur 21 strichlierte Linie 40 angedeutet.

## Patentansprüche

1. Vorrichtung zum Zwischenspeichern thermischer Energie
- mit einem ersten Teilbereich (A), der von mindestens einem Rohrleitungssystem (11) durchzogen ist, in dem ein Arbeitsmedium (14) zur Zu- und Abführung der thermischen Energie strömt,
- mit einem zweiten Teilbereich (B), in dem ein thermisch be- und entladbares Speichermedium (6) angeordnet ist und
- mit einem Fluid (15) das zur Übertragung der thermischen Energie zwischen Rohrleitungssystem (11) und Speichermedium (6) während des Be- bzw. Entladens des Speichermediums (6) den ersten Teilbereich (A) und den zweiten Teilbereich (B) der Vorrichtung durchströmt,
- wobei das Speichermedium (6) Strömungsräume zur Durchleitung des Fluids (15) aufweist, - wobei der erste Teilbereich (A) und der zweite Teilbereich (B) in einem quaderförmgen Gehäuse (1) angeordnet sind und das Gehäuse (1) einen Deckel (4) und einen Boden (5) umfasst,
- wobei der zweite Teilbereich (B) von zwei plattenförmigen monolithischen Feststoffkörpern (20), welche das Speichermedium (6) bilden, gebildet ist, die sich planparallel im seitlichen Abstand gegenüber liegen und den ersten Teilbereich (A) sandwichartig einschließen,
- wobei der Raum zwischen den Feststoffkörpern (20) dem ersten Teilbereich (A) entspricht, welcher in der Mittelebene angeordnet ist,
- wobei die obere Stirnseite (22) und die untere Stirnseite (23) des Feststoffkörpers (20) eine Schräge bilden, wobei der axiale Abstand zum zum Deckel (4) bzw. Boden (5) in Richtung zur Mittelebene zunimmt, wodurch sich zwischen dem Deckel (4) und der oberen Stirnseite (22) und dem Boden (5) und der unteren Stirnseite (23) freie Zonen (7, 8) ergeben, die einen dreieckförmigen Querschnitt besitzen,
- wobei die Strömungsräume mit ihren Enden in die freien Zonen (7, 8) münden.

2. Vorrichtung zum Zwischenspeichern thermischer Energie
∘ mit einem ersten Teilbereich (A), der von mindestens einem Rohrleitungssystem (11) durchzogen ist, in dem ein Arbeitsmedium (14) zur Zu- und Abführung der thermischen Energie strömt,
∘ mit einem zweiten Teilbereich (B), in dem ein thermisch be- und entladbares Speichermedium (6) angeordnet ist und
∘ mit einem Fluid (15) das zur Übertragung der thermischen Energie zwischen Rohrleitungssystem (11) und Speichermedium (6) während des Be- bzw. Entladens des Speichermediums (6) den ersten Teilbereich (A) und den zweiten Teilbereich (B) der Vorrichtung durchströmt,
∘ wobei das Speichermedium (6) Strömungsräume zur Durchleitung des Fluids (15) aufweist,
∘ wobei der erste Teilbereich (A) und der zweite Teilbereich (B) in einem quaderförmigen Gehäuse (1) angeordnet sind und das Gehäuse (1) einen Deckel (4) und einen Boden (5) umfasst,
∘ wobei das Speichermedium (6) aus plattenförmigen Formkörpern (16) geringer Dicke besteht, die im zweiten Teilbereich (B) planparallel und im Abstand zueinander angeordnet sind und sich zwischen dem Deckel (4) und dem Boden (5) erstrecken,
∘ wobei die Strömungsräume für das Fluid (15) durch den lichten Abstand der Formkörper (16) gebildet sind, dergestalt, dass das Fluid (15) das Speichermedium (6) zwischen den plattenförmigen Formkörpern (16) durchströmt,
∘ wobei der zweite Teilbereich (B) den ersten Teilbereich (A), welcher in der Mittelebene des Gehäuses (1) angeordnet ist, sandwichartig einschließt,
∘ wobei die Höhe der plattenförmigen Formkörper (16) in Richtung zur Mittelebene gleichmäßig abnimmt, wodurch der axiale Abstand zwischen dem Deckel (4) und der oberen Stirnseite der plattenförmigen Formkörper (16) und zwischen dem Boden (5) und der unteren Stirnseite der plattenförmigen Formkörper (16) in Richtung zur Mittelebene zunimmt, wodurch sich zwischen dem Deckel (4) und den oberen Stirnseiten der plattenförmigen Formkörper (16) und dem Boden (5) und den unteren Stirnseiten der plattenförmigen Formkörper (16) freie Zonen (7, 8) ergeben, die einen dreieckförmigen Querschnitt besitzen,
∘ wobei die Strömungsräume mit ihren Enden in die freien Zonen (7, 8) münden.

3. Vorrichtung nach Anspruch 1, **dadurch gekennzeichnet, dass** die Strömungsräume von Strömungskanälen (9) oder Strömungsschlitzen im Feststoffkörper (20) gebildet sind.

4. Vorrichtung nach einem der Ansprüche 1 bis 3, **dadurch gekennzeichnet, dass** der Formkörper bei Betriebstemperatur feste Zusätze zur Erhöhung der thermischen Leitfähigkeit aufweist, beispielsweise Graphit, Bauxit, Aluminiumoxid, Metalle, Natriumchlorid, Kaliumchlorid oder andere Stoffe mit einer Wärmeleitfähigkeit von mehr als 3 W/(m*K).

5. Vorrichtung nach einem der Ansprüche 1 bis 4, **dadurch gekennzeichnet, dass** das Fluid (15) von einer Schwefelschmelze, Salzschmelze, Flüssigsalz, Nitratsalz, Chloriden, Luft, Helium, Wasserstoff, einem Wasserstoff-Heliumgemisch oder Dampf oder einem Wärmeträgeröl gebildet ist.

6. Vorrichtung nach einem der Ansprüche 1 bis 4, **dadurch gekennzeichnet, dass** das Fluid (15) von einem Gas gebildet ist, bei dem es sich zu mehr als 70 % um Wasserstoff oder Helium oder einer Mischung aus diesen Gasen handelt.

7. Vorrichtung nach einem der Ansprüche 1 bis 6, **dadurch gekennzeichnet, dass** die Vorrichtung von einer gasdichten Hülle umgeben ist, das Fluid (15) von einem Gas gebildet ist und der umhüllte Raum mit Unterdruck beaufschlagt ist.

8. Vorrichtung nach einem der Ansprüche 1 bis 7, **dadurch gekennzeichnet, dass** die Vorrichtung einen Druckluftspeicher aufweist, der nach dem Wärmespeicher angeordnet ist und dass das Arbeitsmedium von Druckluft gebildet ist, die dem Druckluftspeicher nach Durchströmen des Wärmespeichers zuführbar ist.

9. Anlage zum Zwischenspeichern thermischer Energie mit mindestens zwei Vorrichtungen nach einem der Ansprüche 1 bis 8.

10. Anlage nach Anspruch 9, **dadurch gekennzeichnet, dass** die mindestens zwei Vorrichtungen zum Be- und/oder Entladen des Speichermediums (6) in Reihe oder parallel zueinander geschaltet sind.

## Claims

1. Device for temporarily storing thermal energy, comprising
- a first portion (A) through which at least one pipeline system (11) extends, in which a working medium (14) for supplying and discharging the thermal energy flows,
- a second portion (B) in which a storage medium (6) is arranged which can be thermally charged and discharged and
- a fluid (15) which flows through the first portion (A) and the second portion (B) of the device in order to transfer the thermal energy between the pipeline system (11) and the storage medium (6) during charging and discharging the storage medium (6),
- wherein the storage medium (6) has flow chambers for guiding the fluid (15) therethrough,
- wherein the first portion (A) and the second portion (B) are arranged in a cuboid housing (1) and the housing (1) comprises a cover (4) and a base (5),
- wherein the second portion (B) is formed by two plate-shaped monolithic solid bodies (20), which form the storage medium (6), are opposite one another with lateral spacing in a plane-parallel manner and enclose the first portion (A) in a sandwich-like manner,
- wherein the space between the solid bodies (20) corresponds to the first portion (A), which is arranged in the central plane,
- wherein the upper end face (22) and the lower end face (23) of the solid body (20) form an incline, wherein the axial distance from the cover (4) or the base (5) towards the central plane increases, as a result of which open areas (7, 8) are produced between the cover (4) and the upper end face (22) and between the base (5) and the lower end face (23), which areas have a triangular cross section,
- wherein the flow chambers open into the open areas (7, 8) at their ends.

2. Device for temporarily storing thermal energy, comprising
o a first portion (A) through which at least one pipeline system (11) extends, in which a working medium (14) for supplying and discharging the thermal energy flows,
o a second portion (B) in which a storage medium (6) is arranged which can be thermally charged and discharged and
o a fluid (15) which flows through the first portion (A) and the second portion (B) of the device in order to transfer the thermal energy between the pipeline system (11) and the storage medium (6) during charging and discharging the storage medium (6),
o wherein the storage medium (6) has flow chambers for guiding the fluid (15) therethrough,
o wherein the first portion (A) and the second portion (B) are arranged in a cuboid housing (1) and the housing (1) comprises a cover (4) and a base (5),
o wherein the storage medium (6) consists of plate-like shaped bodies (16), which have a low thickness, are arranged at a spacing from one another in a plane-parallel manner in the second portion (B) and extend between the cover (4) and the base (5),
o wherein the flow chambers for the fluid (15) are formed by the clear distance between the shaped bodies (16) in such a way that the fluid (15) flows through the storage medium (6) between the plate-like shaped bodies (16),
o wherein the second portion (B) encloses the first portion (A) in a sandwich-like manner, which first portion is arranged in the central plane of the housing (1),
o wherein the height of the plate-like shaped bodies (16) uniformly decreases towards the central plane, as a result of which the axial distance between the cover (4) and the upper end face of the plate-like shaped bodies (16) and between the base (5) and the lower end face of the plate-like shaped bodies (16) increases towards the central plane, as a result of which open areas (7, 8) are produced between the cover (4) and the upper end faces of the plate-like shaped bodies (16) and the base (5) and the lower end faces of the plate-like shaped bodies (16), which areas have a triangular cross section,
o wherein the flow chambers open into the open areas (7, 8) at their ends.

3. Device according to claim 1, **characterised in that** the flow chambers are formed by flow channels (9) or flow grooves in the solid body (20).

4. Device according to any of claims 1 to 3, **characterised in that** the shaped body has additives, which are solid at operating temperatures, for increasing the thermal conductivity, for example, graphite, bauxite, aluminium oxide, metals, sodium chloride, potassium chloride or other substances having a thermal conductivity of greater than 3 W/(m*K).

5. Device according to any of claims 1 to 4, **characterised in that** the fluid (15) is formed by molten sulphur, molten salt, liquid salt, nitrate salt, chlorides, air, helium, hydrogen, a hydrogen-helium mixture or steam or a heat transfer oil.

6. Device according to any of claims 1 to 4, **characterised in that** the fluid (15) is formed by a gas which is more than 70 % hydrogen or helium or a mixture of these gases.

7. Device according to any of claims 1 to 6, **characterised in that** the device is surrounded by a gas-tight casing, the fluid (15) is formed by a gas and negative pressure is applied to the encased space.

8. Device according to any of claims 1 to 7, **characterised in that** the device has a compressed-air store, which is arranged downstream of the heat accumulator, and **in that** the working medium is formed by compressed air which can be fed to the compressed-air store after flowing through the heat accumulator.

9. System for temporarily storing thermal energy, comprising at least two devices according to any of claims 1 to 8.

10. System according to claim 9, **characterised in that** the at least two devices for charging and/or discharging the storage medium (6) are connected to one another in series or in parallel.

## Revendications

1. Dispositif de stockage intermédiaire d'énergie thermique, comprenant
- une première région partielle (A), parcourue par au moins un système (11) de conduits tubulaires dans lequel un agent de travail (14) s'écoule en vue de l'amenée et de l'évacuation de l'énergie thermique,
- une seconde région partielle (B), dans laquelle se trouve un agent d'accumulation (6) pouvant être chargé et déchargé thermiquement, et
- un fluide (15) qui parcourt la première région partielle (A) et la seconde région partielle (B) du dispositif en vue du transfert de l'énergie thermique, entre le système (11) de conduits tubulaires et l'agent d'accumulation (6), au stade respectif du chargement ou du déchargement dudit agent d'accumulation (6),
- ledit agent d'accumulation (6) comportant des espaces d'écoulement dévolus à la circulation du fluide (15),
- ladite première région partielle (A) et ladite seconde région partielle (B) étant logées dans un boîtier parallélépipédique (1), et ledit boîtier (1) incluant un couvercle (4) et un fond (5),
- ladite seconde région partielle (B) étant constituée de deux corps solides monobloc (20) en forme de plaques, qui matérialisent l'agent d'accumulation (6), sont placés en vis-à-vis dans des plans parallèles, latéralement à distance l'un de l'autre, et prennent en sandwich la première région partielle (A),
- l'espace, situé entre lesdits corps solides (20), correspondant à ladite première région partielle (A) disposée dans le plan médian,
- la face extrême supérieure (22) et la face extrême inférieure (23) du corps solide (20) formant un biseau, sachant que la distance axiale respective, par rapport au couvercle (4) ou au fond (5), croît en direction dudit plan médian en donnant ainsi naissance, entre ledit couvercle (4) et ladite face extrême supérieure (22) et entre ledit fond (5) et ladite face extrême inférieure (23), à des zones libres (7, 8) dotées d'une section transversale triangulaire,
- les espaces d'écoulement débouchant dans lesdites zones libres (7, 8) par leurs extrémités.

2. Dispositif de stockage intermédiaire d'énergie thermique, comprenant
- une première région partielle (A), parcourue par au moins un système (11) de conduits tubulaires dans lequel un agent de travail (14) s'écoule en vue de l'amenée et de l'évacuation de l'énergie thermique,
- une seconde région partielle (B), dans laquelle se trouve un agent d'accumulation (6) pouvant être chargé et déchargé thermiquement, et
- un fluide (15) qui parcourt la première région partielle (A) et la seconde région partielle (B) du dispositif en vue du transfert de l'énergie thermique, entre le système (11) de conduits tubulaires et l'agent d'accumulation (6), au stade respectif du chargement ou du déchargement dudit agent d'accumulation (6),
- ledit agent d'accumulation (6) comportant des espaces d'écoulement dévolus à la circulation du fluide (15),
- ladite première région partielle (A) et ladite seconde région partielle (B) étant logées dans un boîtier parallélépipédique (1), et ledit boîtier (1) incluant un couvercle (4) et un fond (5),
- ledit agent d'accumulation (6) étant constitué par des corps moulés (16) en forme de plaques de faible épaisseur, qui sont agencés avec espacement mutuel dans des plans parallèles, dans ladite seconde région partielle (B), et s'étendent entre ledit couvercle (4) et ledit fond (5),
- les espaces d'écoulement, dédiés au fluide (15), étant matérialisés par la distance intérieure séparant lesdits corps moulés (16), de façon telle que ledit fluide (15) parcoure ledit agent d'accumulation (6) entre lesdits corps moulés (16) en forme de plaques,
- ladite seconde région partielle (B) prenant en sandwich ladite première région partielle (A) disposée dans le plan médian du boîtier (1),
- la hauteur des corps moulés (16) en forme de plaques décroissant uniformément en direction dudit plan médian, si bien que la distance axiale entre le couvercle (4) et la face extrême supérieure desdits corps moulés (16) en forme de plaques, et entre le fond (5) et la face extrême inférieure desdits corps moulés (16) en forme de plaques, croît en direction dudit plan médian en donnant ainsi naissance, entre ledit couvercle (4) et les faces extrêmes supérieures desdits corps moulés (16) en forme de plaques, et entre ledit fond (5) et les faces extrêmes inférieures desdits corps moulés (16) en forme de plaques, à des zones libres (7, 8) dotées d'une section transversale triangulaire,
- les espaces d'écoulement débouchant dans lesdites zones libres (7, 8) par leurs extrémités.

3. Dispositif selon la revendication 1, **caractérisé par le fait que** les espaces d'écoulement sont formés par des canaux d'écoulement (9), ou par des fentes d'écoulement pratiquées dans le corps solide (20).

4. Dispositif selon l'une des revendications 1 à 3, **caractérisé par le fait que** le corps moulé comporte des additifs solides à la température de service, en vue d'accroître la conductivité thermique, par exemple du graphite, de la bauxite, de l'oxyde d'aluminium, des métaux, du chlorure de sodium, du chlorure de potassium, ou d'autres substances présentant une conductivité thermique supérieure à 3 W/(m*K).

5. Dispositif selon l'une des revendications 1 à 4, **caractérisé par le fait que** le fluide (15) est constitué d'une masse de soufre en fusion, d'une masse de sel en fusion, de sel liquide, de sel de nitrate, de chlorures, d'air, d'hélium, d'hydrogène, d'un mélange d'hydrogène et d'hélium, voire de vapeur ou d'une huile de transfert de chaleur.

6. Dispositif selon l'une des revendications 1 à 4, **caractérisé par le fait que** le fluide (15) est constitué d'un gaz renfermant, pour plus de 70 %, de l'hydrogène ou de l'hélium, voire un mélange de ces gaz.

7. Dispositif selon l'une des revendications 1 à 6, **caractérisé par le fait que** ledit dispositif est entouré d'une enveloppe étanche aux gaz, le fluide (15) étant constitué d'un gaz, et l'espace confiné étant sollicité par une dépression.

8. Dispositif selon l'une des revendications 1 à 7, **caractérisé par le fait que** ledit dispositif comporte un accumulateur d'air comprimé, placé après l'accumulateur de chaleur ; et **par le fait que** l'agent de travail consiste en de l'air comprimé pouvant être délivré audit accumulateur d'air comprimé après avoir parcouru ledit accumulateur de chaleur.

9. Installation de stockage intermédiaire d'énergie thermique, comprenant au moins deux dispositifs conformes à l'une des revendications 1 à 8.

10. Installation selon la revendication 9, **caractérisée par le fait que** les deux dispositifs, à présence minimale, sont branchés en série ou en parallèle, en vue du chargement et/ou du déchargement de l'agent d'accumulation (6).
